(19) Europäisches Patentamt
European Patent Office
Office européen des brevets

(11) **EP 4 273 855 B1**

(12) **EUROPEAN PATENT SPECIFICATION**

(45) Date of publication and mention
of the grant of the patent:
**25.03.2026 Bulletin 2026/13**

(21) Application number: **21912486.4**

(22) Date of filing: **26.01.2021**

(51) International Patent Classification (IPC):
*G10L 15/16* (2006.01)    *G10L 15/02* (2006.01)
*G10L 15/26* (2006.01)    *G10L 25/24* (2013.01)

(52) Cooperative Patent Classification (CPC):
**G10L 15/16;** G10L 15/02; G10L 2015/088

(86) International application number:
**PCT/CN2021/073773**

(87) International publication number:
**WO 2022/141706 (07.07.2022 Gazette 2022/27)**

(54) **SPEECH RECOGNITION METHOD AND APPARATUS, AND STORAGE MEDIUM**

VERFAHREN UND VORRICHTUNG ZUR SPRACHERKENNUNG UND SPEICHERMEDIUM

PROCÉDÉ ET APPAREIL DE RECONNAISSANCE DE LA PAROLE ET SUPPORT DE STOCKAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.12.2020 CN 202011641751**

(43) Date of publication of application:
**08.11.2023 Bulletin 2023/45**

(73) Proprietors:
• **Iflytek Co., Ltd.**
**Hefei, Anhui 230088 (CN)**
• **University of Science and Technology of China**
**Hefei City, Anhui 230026 (CN)**

(72) Inventors:
• **FANG, Xin**
**Hefei, Anhui 230088 (CN)**
• **WU, Minghui**
**Hefei, Anhui 230088 (CN)**
• **MA, Zhiqiang**
**Hefei, Anhui 230088 (CN)**
• **LIU, Junhua**
**Hefei, Anhui 230088 (CN)**

(74) Representative: **Prinz & Partner mbB
Patent- und Rechtsanwälte
Rundfunkplatz 2
80335 München (DE)**

(56) References cited:
EP-A1- 4 156 176        CN-A- 110 214 351
CN-A- 111 583 909       CN-A- 111 783 466
US-A1- 2020 357 387     US-B1- 10 255 922

• **BRUGUIER ANTOINE ET AL: "Phoebe:
Pronunciation-aware Contextualization for End-
to-end Speech Recognition", ICASSP 2019 - 2019
IEEE INTERNATIONAL CONFERENCE ON
ACOUSTICS, SPEECH AND SIGNAL
PROCESSING (ICASSP), IEEE, 12 May 2019
(2019-05-12), pages 6171 - 6175, XP033565020,
DOI: 10.1109/ICASSP.2019.8682441**

EP 4 273 855 B1

## Description

### FIELD

The present disclosure relates to the field of speech recognition technology, and in particular to a speech recognition method, an electronic device, a computer readable storage medium and a computer program product.

### BACKGROUND

In the field of speech recognition, a conventional incentive method for hot-word scoring results in a limited improvement. This is because low-frequency words outputted by end-to-end models have low scores. The CLAS (Contextual Listen, Attend and Spell, CLAS) proposed by Google incents hot words in a model level and achieves good effects. However, the CLAS is a simple approach and is easy to misrecognize a hot word from a sentence that does not include the hot word, resulting in a decreased recognition rate. Therefore, it is difficult to apply the CLAS directly in a real system. Therefore, a problem of how to improve an accuracy of hot word recognition has attracted the attention of those skilled in the art.

In CN Application Publication No. CN 111583909 A, a speech recognition method is provided. The method includes: acquiring a configured hot word library; during the process of recognizing speech to be recognized, determining, on the basis of said speech and the hot word library, an audio-related characteristic

needed at the current decoding moment; since hot word information is used during the process of determining the audio-related characteristic, if a speech clip at the current decoding moment includes a certain hot word, the determined audio-related characteristic being capable of including complete audio information corresponding to the hot word; further determining, on the basis of the audio-related characteristic and from the hot word library, a hot-word-related characteristic needed at the current decoding moment, wherein the hot-word-related characteristic can accurately indicate whether the speech clip at the current decoding moment includes a hot word and indicate which hot word is specifically included; and finally, determining a recognition result of said speech at the current decoding moment on the basis of the audio-related characteristic and the hot-word-related characteristic, wherein the recognition result for recognition of the hot word is more accurate.

In US Application Publication No. US 2020/357387 A1, a method is provided, which includes receiving audio data encoding an utterance and obtaining a set of bias phrases corresponding to a context of the utterance. Each bias phrase includes one or more words. The method also includes processing, using a speech recognition model, acoustic features derived from the audio to generate an output from the speech recognition model. The speech recognition model includes a first encoder configured to receive the acoustic features, a first attention module, a bias encoder configured to receive data indicating the obtained set of bias phrases, a bias encoder, and a decoder configured to determine likelihoods of sequences of speech elements based on output of the first attention module and output of the bias attention module. The method also includes determining a transcript for the utterance based on the likelihoods of sequences of speech elements.

In BRUGUIER ANTOINE ET AL: "Phoebe: Pronunciation-aware Contextualization for End-to-end Speech Recognition", ICASSP 20192019 IEEE INTERNATIONAL CONFERENCE ON ACOUSTICS, SPEECH AND SIGNAL PROCESSING (ICASSP), IEEE, 12 May 2019 (2019-05-12) pages 6171-6175, a model is provided based on the recently proposed Contextual Listen, Attend, and Spell (CLAS) model. As in CLAS, this model accepts a set of bias phrases, which are first converted into fixed length embeddings which are provided as additional inputs to the model.

### SUMMARY

The invention is set out in the appended set of claims. A speech recognition method, an electronic device, a computer readable storage medium and a computer program product are provided according to the embodiments of the present disclosure, with which an accuracy of hot-word recognition can be improved.

According to the invention, a speech recognition method is provided according to an embodiment of the present disclosure. The speech recognition method includes:

encoding to-be-recognized speech data to obtain a first feature vector sequence;
encoding each hot word in a predetermined hot-word bank to obtain a second feature vector sequence;
encoding an audio segment of each hot word in the predetermined hot-word bank to obtain a third feature vector sequence;
performing a first attention operation on the first feature vector sequence and the third feature vector sequence to obtain a fourth feature vector sequence; and
performing a decoding operation based on the second feature vector sequence, the third feature vector sequence and the fourth feature vector sequence to obtain a recognition result,

wherein the performing a decoding operation based on the second feature vector sequence, the third feature vector sequence and the fourth feature vector sequence to obtain a recognition result comprises:

performing a second attention operation on the second feature vector sequence, the third feature vector sequence and the fourth feature vector sequence to obtain a hot-word text contextual feature vector sequence, a hot-word audio contextual feature vector sequence and an audio contextual feature vector sequence; and

inputting the hot-word text contextual feature vector sequence, the hot-word audio contextual feature vector sequence and the audio contextual feature vector sequence to a decoder for a decoding operation to obtain the recognition result.

In a second aspect, an electronic device is provided according to an embodiment of the present disclosure. The electronic device includes: a processor, a memory, a communication interface, and at least one program. The at least one program is stored in the memory and configured to be executed by the processor. The programs include instructions for implementing steps of any method according to the first aspect of the embodiments of the present disclosure.

In a third aspect, a computer readable storage medium is provided according to an embodiment of the present disclosure. The computer readable storage medium stores a computer program for electronic data interchange, where the computer program causes a computer to implement part or all of steps according to the first aspect of the embodiments of the present disclosure.

In a fourth aspect, a computer program product is provided according to an embodiment of the present disclosure. The computer program product includes a non-transitory computer-readable storage medium storing a computer program, and the computer program is operable to cause a computer to implement part or all of steps according to the first aspect of the embodiments of the present disclosure. The computer program product may be a software package.

The following advantageous effects can be obtained from implementation of the embodiments of the present disclosure.

It can be seen that in the speech recognition method, the speech recognition apparatus and the related product described in the embodiments of the present disclosure, the to-be-recognized speech data is encoded to obtain the first feature vector sequence; each hot word in the predetermined hot-word bank is encoded to obtain the second feature vector sequence; the audio segment of each hot word in the predetermined hot-word bank is encoded to obtain the third feature vector sequence; the first attention operation is performed on the first feature vector sequence and the third feature vector sequence to obtain the fourth feature vector sequence; and the decoding operation is performed based on the second feature vector sequence, the third feature vector sequence and the fourth feature vector sequence to obtain the recognition result. The textual information of the hot word, the audio segment corresponding to the hot word, and a fusion of the to-be-recognized speech data and the audio segment of the textual information of the hot word obtained through the attention operation are used as an input. Therefore, an incenting effect for the hot word can be significantly improved. With the decoding operation on the textual information of the hot word, the audio segment, and the fusion of the to-be recognized speech data and the audio

segment, the effect of hot-word recognition can be improved. Thereby, the accuracy of the hot-word recognition is improved.

## BRIEF DESCRIPTION OF THE DRAWINGS

For more clearly illustrating technical solutions in embodiments of the present disclosure or in the conventional technology, drawings used in the description of the embodiments or the conventional technology will be briefly described hereinafter. Apparently, the drawings in the following description illustrate only some embodiments of the present disclosure. For those skilled in the art, other drawings may be obtained based on the provided drawings without any creative effort.

Figure 1A is a schematic structural diagram of a speech recognition model according to an embodiment of the present disclosure;

Figure 1B is a schematic flow chart of a speech recognition method according to an embodiment of the present disclosure;

Figure 1C is a schematic diagram demonstrating encoding of a hot word according to an embodiment of the present disclosure;

Figure 1D is a schematic diagram demonstrating concatenating of features according to an embodiment of the present disclosure;

Figure 2 is a schematic flow chart of a speech recognition method according to another embodiment of the present disclosure;

Figure 3 is a schematic structural diagram of an electronic device according to an embodiment of the present disclosure;

Figure 4A is a block diagram of functional units of a speech recognition apparatus according to an embodiment of the present disclosure; and

Figure 4B is a block diagram of functional units of a speech recognition apparatus according to another embodiment of the present disclosure.

## DETAILED DESCRIPTION OF THE EMBODIMENTS

In order to better understand the solutions of the present disclosure by those skilled in the art, the technical solutions of embodiments of the present disclosure are clearly and completely described below in conjunction with the drawings of the embodiments of the present disclosure. Apparently, the embodiments described below are only some embodiments of the present disclosure, rather than all the embodiments. All the other embodiments obtained by those skilled in the art based on the embodiments in the present disclosure without any creative efforts fall into the scope of protection of the present disclosure.

It should be noted that in the specification, the claims and the drawings of the present disclosure, terms such as "first" and "second" are used for distinguishing different objects from each other rather than describing a certain order. In addition, terms of "include", "comprise" or any other variants are intended to be non-exclusive. For example, a process, a method, a system, a product or a device including a series of steps or units includes not only the enumerated steps or units, but also includes steps or units that are not enumerated in a possible example, or also includes other steps or units inherent in the process, the method, the product or the device in a possible example.

The "embodiment" mentioned herein means that specific features, structures or characteristics described in conjunction with the embodiment may be included in at least one embodiment of the present disclosure. The different appearances of this phrase in the specification do not necessarily indicate the same embodiment, or an independent or alternative embodiment that is exclusive with other embodiments. Those skilled in the art explicitly and implicitly understand that the embodiments described herein may be combined with other embodiments.

An electronic device referred to in embodiments of the present disclosure may include various devices having a voice recognition function, such as a handheld device, a voice recorder, a smart robot, a smart reader, a smart translator, a smart headset, a smart dictionary, a smart reading machine, an in-vehicle device, a wearable device, a computing device or other processing devices connected to a wireless modem, and various forms of user equipment (UE), mobile stations (MS), terminal devices, and the like. In addition, the electronic device may be a server or a smart home appliance.

In the embodiments of the present disclosure, the smart home appliance may be at least one of the following: a refrigerator, a washing machine, a rice cooker, a smart curtain, a smart lamp, a smart bed, a smart bin, a microwave oven, an oven, a steamer, an air conditioner, a hood, a server, a smart door, a smart window, a window door wardrobe, a smart speaker, a smart home supply, a smart chair, a smart drying rack, a smart shower, a water dispenser, a water purifier, an air purifier, a doorbell, a monitoring system, a smart garage, a TV, a projector, a smart table, a smart sofa, a massage chair, a treadmill, or the like.

The embodiments of the present disclosure are described in detail hereinafter.

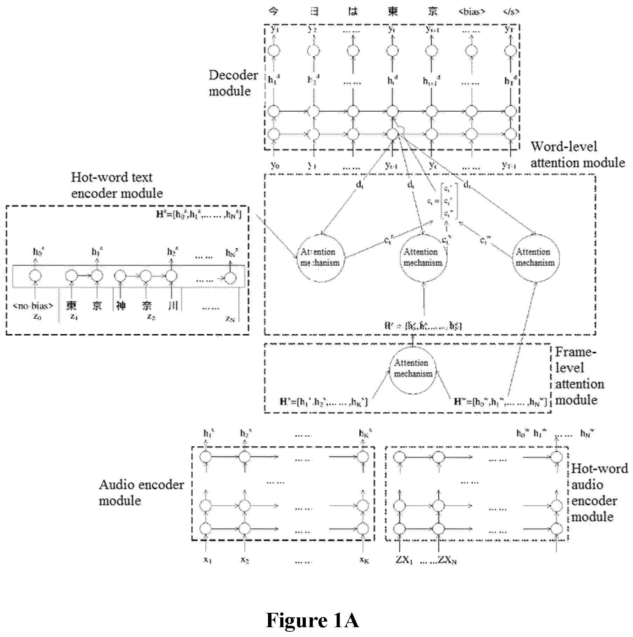

Reference is made to Figure 1A, which is a speech recognition model according to an embodiment of the present disclosure. The speech recognition model includes: an audio encoder module, a hot-word text encoder module, a hot-word audio encoder module, a frame-level attention module, a word-level attention module, and a decoder module. The decoder module may include a decoder. The speech recognition model may be configured to implement a speech recognition function as follows.

First, a speech feature vector sequence $\mathbf{X}=[x_1,x_2,.......,x_K]$ of to-be-recognized speech data is encoded by the audio encoder module, to obtain a first feature vector sequence $\mathbf{H}^x=[h_1{}^x,h_2{}^x,......,h_K{}^x]$, where $x_k$ represents the k-th frame of speech feature vector, $h_k{}^x$ represents a feature vector outputted by a last neural network layer of the audio encoder module, and $h_k{}^x$ corresponds to a result obtained from transforming $x_k$ through the audio encoder module. The electronic device may further encode each hot word in a predetermined hot-word bank individually through the hot-word text encoder module, so as to encode hot words having different lengths into vectors in a fixed dimension. Thereby, a feature vector sequence representing the hot words is obtained, which is referred to as a second feature vector sequence $\mathbf{H}^z=[h_0{}^z,h_1{}^z,......,h_N{}^z]$, where $h_n{}^z$ represents a feature vector obtained from encoding the n-th hot word by the hot-word encoder module. The predetermined hot-word bank may be set up in advance based on a user demand. For example, hot words corresponding to a certain identity or profession may be selected from a basic hot-word bank to form a predetermined hot-word bank. The basic hot-word bank may be built in advance based on different identities or professions. The predetermined hot-word bank may be automatically generated based on historical cases of the user. For example, the predetermined hot-word bank may be automatically generated from hot words presented during usage by the user. For an example of a voice assistant scenario, contacts in an address book of the user may be read as hot words to form the predetermined hot-word bank. For another example, some physical text, such as place and person names, inputted by the user in Pinyin during the usage may be recorded by an input method with legal authorization as hot words to form the predetermined hot-word bank. The predetermined hot-word bank may be stored locally or in a cloud.

Next, an audio segment of each hot word in the predetermined hot-word bank may be encoded individually by the hot-word audio encoder module. The hot-word audio encoder module may use a same encoder as the audio encoder module. Thereby, hot-word audio segments having different lengths may be encoded as vectors in a fixed dimension. Thereby, an encoder output of a last frame of a hot-word audio segment or an average output of all frames of the hot-word audio segment may be used as a representation vector of the hot-word audio segment,. Therefore, a third feature vector sequence $H^w=[h_0^w, h_1^w, ......, h_N^w]$ representing the hot-word audio segments is obtained, where $h_n^w$ represents a feature vector obtained from encoding the nth hot-word audio segment by the hot-word encoder module. An attention operation is then performed by the frame-level attention module, in a frame level, on the encoded representation (the first feature vector sequence) of all frame of the audio and the encoded representation (the third vector feature sequence) of hot-word audios, to fuse hot-word information and generate a new encoded representation of the audio, which is referred to as a fourth feature vector sequence $\overline{H}^x = [\overline{h}_0^x, \overline{h}_1^x, ......, \overline{h}_K^x]$. A decoding operation may be then performed in two manners as follows.

In a first manner, a state vector $d_t$ outputted by the decoder module at a time instant t, the fourth feature vector sequence $\overline{H}^x$ outputted by the frame-level attention module, the second feature vector sequence $H^z$ outputted by the hot-word text encoder and the third feature vector sequence $H^w$ outputted by the hot-word audio encoder module are inputted to the word-level attention module, calculation is performed under an attention mechanism to obtain an audio contextual feature vector $C_t^x$, a hot-word audio contextual feature vector $C_t^w$ and a hot-word text contextual feature vector $C_t^z$ for predicting the t-th character, which are then inputted into the decoder module for decoding.

In a second manner, the fourth feature vector sequence $\overline{H}^x$ outputted by the frame-level attention module, the second feature vector sequence $H^z$ outputted by the hot-word text encoder and the third feature vector sequence $H^w$ outputted by the hot-word audio encoder may be directly inputted into the decoder in the decoder module for decoding.

In an implementation, since not only the textual information of the hot words, but also the audio segments corresponding to the hot words and a fusion of the to-be-recognized speech data and the audio segments of the textual information of the hot words obtained from the attention operation are inputted, the incenting effect for the hot words can be significantly improved. The decoding operation is performed on the textual information of the hot words, the audio segments, and the fusion of to-be recognized speech data and the audio segments, so that an effect of hot-word recognition can be improved, and thus an accuracy of the hot-word recognition can be improved.

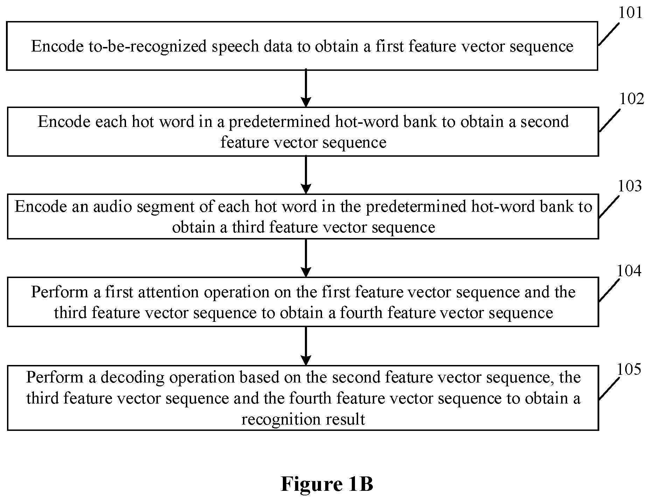

Reference is further made to Figure 1B, which is a schematic flow chart of a speech recognition method according to an embodiment of the present disclosure. As shown in Figure 1B, the speech recognition method is applied to the speech recognition model shown in Figure 1A, which is applied to an electronic device. The speech recognition method includes steps 101 to 105.

In step 101, to-be-recognized speech data is encoded to obtain a first feature vector sequence.

In an embodiment of the present disclosure, the to-be-recognized speech data may be speech data or a speech feature vector sequence which is pre-stored or captured in real time. The speech data may be at least one of: audio data, audio data recorded in real time, audio data extracted from video data, audio data obtained from synthesis, or the like, which is not limited herein. The speech feature vector sequence may be at least one of: a Filter Bank feature, a Mel frequency cepstrum coefficient (MFCC) feature, a perceptual linear predictive (PLP) features, or the like, which is not limited here. For example, in a case that the to-be-recognized speech data is speech data, the electronic device may extract features from the speech data to obtain the speech feature vector sequence and then encode the speech feature vector sequence to obtain the first feature vector sequence. For another example, in a case that the to-be-recognized speech data is the speech feature vector sequence, the electronic device may directly encode the speech feature vector sequence to obtain the first feature vector sequence.

In a specific implementation, as shown in Figure 1B, the electronic device may encode the to-be-recognized speech data through an audio encoder module to obtain the first feature vector sequence. The audio encoder module may include at least one encoding layer. The encoding layer may be a long short-term memory layer in a long short-term memory (LSTM) neural network or a convolutional layer in a convolutional neural network. The long short-term memory neural network may be a long short-term memory layer in a unidirectional or bidirectional long short-term memory neural network. By way of example, in an embodiment of the present disclosure, the inputted speech feature vector sequence $X=[x_1, x_2, ......, x_K]$: may be encoded by using a 3-layer unidirectional long short-term memory, to output the first feature vector sequence $H^x=[h_1^x, h_2^x, ......, h_K^x]$.

In step 102, each hot word in a predetermined hot-word bank is encoded to obtain a second feature vector sequence.

The predetermined hot-word bank may be stored in the electronic device in advance, and may include textual information of multiple hot words. The electronic device may encode each of the hot words in the predetermined hot-word bank through the hot-word text encoder module to obtain the second feature vector sequence. Alternatively, the predetermined hot-word bank may be pre-stored on other servers and may be obtained through access.

In a specific implementation, different hot words may include the same or different numbers of characters. In a case different numbers of characters, for example, a Japanese hot word "東京" (Tokyo) has two characters and "神奈川" (Kanagawa) has three characters, the input with different lengths may be represented by vectors in a fixed dimension, so as to facilitate processing by the model. The hot-word text encoder module is configured to encode hot words having different lengths into vectors in a fixed dimension. The hot-word text encoder module may include at least one encoding layer, which is a long short-term memory layer in a long short-term memory neural network or a convolutional layer in a convolutional neural network. The long short-term memory neural network may be a long short-term memory layer in a unidirectional or bidirectional long short-term memory neural network.

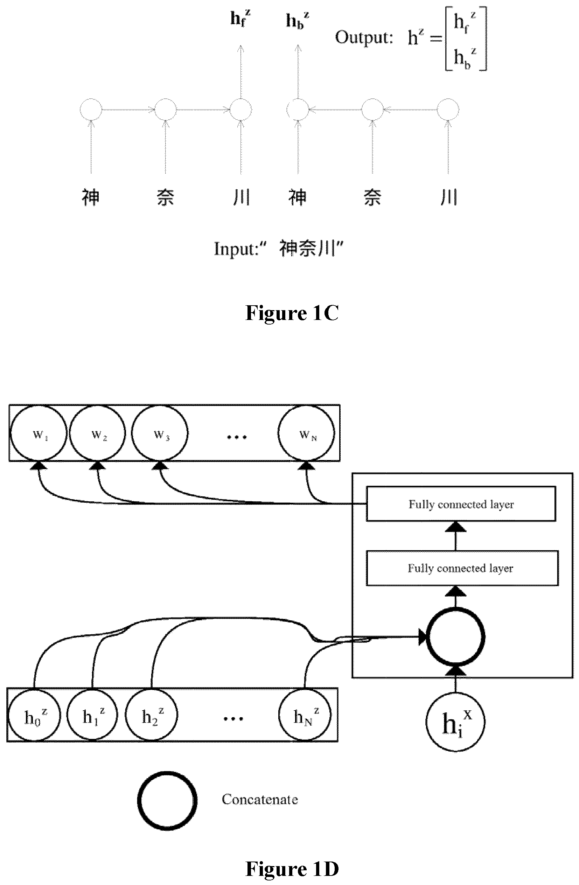

In a specific implementation, the bidirectional long short-term memory layer can realize better encoding of the hot words than the unidirectional long short-term memory layer. For example, assuming a single bidirectional long short-term memory layer and the hot word "神奈川", which having three characters "神", "奈", and "川", a schematic diagram of encoding of the hot word by the hot word encoder with the single bidirectional long short-term memory layer is as shown in Figure 1C. The left side of the diagram shows a forward part of the bidirectional long short-term memory layer and the right side shows a backward part of the bi-directional long short-term memory layer. An output vector $h_f^z$ from a last step of the forward part and an output vector $h_b^z$ from a last step of the backward part are concentrated to obtain a vector $h^z$ as an encoded vector representation of the hot word. Encoded vector representations of multiple hot words may constitute a second feature vector sequence. Assuming that there are N+1 hot words $\mathbf{Z}=[z_0,z_1,......,z_N]$, the hot words are processed individually by the hot-word encoder module to obtain the second feature vector sequence $\mathbf{H}^z=[h_0^z,h_1^z,......,h_N^z]$, where $h_i^z$ represents the encoded vector of the i-th hot word $z_i$. It should be noted that $z_0$ represents a special hot word "<no-bias>", indicating that non-existence of any hot word. In a case that the hot word " <no-bias>" is selected for a subsequent decoding process, the <no-bias> is not to be incented. In this way, a case where no hot word exists in the speech or a to-be-recognized speech segment is not a hot word can be handled.

In step 103, an audio segment of each hot word in the predetermined hot-word bank is encoded to obtain a third feature vector sequence.

The electronic device may encode an audio segment of each hot word in the predetermined hot-word bank through the hot-word audio encoder module to obtain a third feature vector sequence. The third feature vector sequence may represent audio information in the audio segments of the hot words.

In a specific implementation, the hot-word audio encoder module and the audio encoder module described above may share an algorithm. For example, the hot-word audio encoder module and the audio encoder module use a same encoder. The hot-word audio encoder module may include at least one encoding layer, which may be a long short-term memory layer in a long short-term memory neural network or a convolutional layer in a convolutional neural network. The long short-term memory neural network may be a long short-term memory layer in the unidirectional or bidirectional long short-term memory neural network. In other implementations, the hot-word audio encoder module and the audio encoder module may be two encoders independent from each other, which is not limited here.

The audio segment of each hot word may be obtained in several ways, including, but not limited to, cutting from an audio, manually capturing, synthesising by a speech synthesis system, which is not limited herein. The audio segment of each hot word can be obtained ultimately. For example, the audio segment of the hot word may be pre-stored or may be synthesized based on the hot word. For ease of description, in an embodiment of the present disclosure, the inputted feature vector sequence $\mathbf{X}=[x_1,x_2,......,x_K]$ of the audio segments of the hot words may be encoded by using a 3-layer unidirectional long short-term memory layer, and the output of the last frame is determined as a representation vector of the audio segments of the hot words. Since the encoding method is LSTM, which is a recursive neural network, the last frame can represent information of the audio sequence. In other implementations, it is possible to take an average of al frames, rather than the last frame. Assuming a total of N+1 hot words $\mathbf{Z}=[z_0,z_1,......,z_N]$, audios of the hot words are encoded independently by the hot-word audio encoder module to obtain a hot-word audio vector sequence, i.e. a third feature vector sequence $\mathbf{H}^w=[h_0^w,h_1^w,......,h_N^w]$, where $h_i^w$ represents the audio encoded vector of the i-th hot word $z_i$. In particular, $z_0$ represents a special hot word "<no-bias>", which means non-existence of a hot word. In a specific implementation, $z_0$ may be replaced by an average of all hot word vectors, where the all hot word vectors may refer to all vectors of at least one of the second feature vector sequence and the third feature vector sequence. In a case that the "<no-bias>" is selected as a hot word in the decoding process, the <no-bias> is not incented, so as to handle a case where there is no hot word in the speech or the to-be-recognized speech segment is not a hot word.

In step 104, a first attention operation is performed on the first feature vector sequence and the third feature vector sequence to obtain a fourth feature vector sequence.

In a specific implementation, the electronic device may perform a first attention operation on the first feature vector sequence and the third feature vector sequence through the frame-level attention module, so as to fuse features of the first feature vector sequence and the third feature vector sequence to obtain a fourth feature vector sequence. Thereby, an incenting effect for the hot word significantly improved.

The frame-level attention module is configured to fuse each frame of an output of the audio encoder module with hot-word textual information from the predefined hot-word bank to form the fourth feature vector sequence which has a representation of the hot-word information. Therefore, the audio representation (the first feature vector sequence) of the to-be-recognized speech data in each frame has improved robustness in terms of the hot words. In an implementation, the attention mechanism of the first attention operation may be configured to perform the attention mechanism operation on the third feature vector sequence $H^z=[h_0^z,h_1^z,......,h_N^z]$ outputted by the hot-word audio encoder by using a frame of vector $h_i^x$ outputted by the audio encoder module as a query.

In an embodiment, the step 104 of performing the first attention operation on the first feature vector sequence and the third feature vector sequence to obtain the fourth feature vector sequence includes the following sub-steps 41 to 43.

In 41, a matching operation is performed on each of first feature vectors in the first feature vector sequence and each of third feature vectors in the third feature vector sequence to obtain matching coefficients corresponding to the third feature vectors.

In 42, an operation is performed on the matching coefficients corresponding to the third feature vectors and the third feature vectors correspondingly to obtain new feature vectors corresponding to the third feature vectors.

In 43, the new feature vectors corresponding to the third feature vectors is concatenated with the third feature vectors correspondingly to obtain representation vectors corresponding to the third feature vectors as the fourth feature vector sequence.

In an example, as shown in Figure 1D, the electronic device may take any of the first feature vectors in the first feature vector sequence as a query, and calculate, based on an attention mechanism, a matching coefficient between the query and each of feature vectors in the third feature vector sequence. For example, a matching coefficient is obtained by calculating an inner product or a feature distance, and then the matching coefficient is normalized to obtain a matching coefficient $W_n$. Then an operation is performed on the matching coefficient $W_n$ and a corresponding feature vectors $h_n^z$ to obtain a new feature vector $h_i^z$ that matches the query term best. The operation may be any of the following: point multiplication and summing, weighting, calculating an inner product, or the like, which is not limited here. The new feature vector $h_i^z$ is concatenated with the query to finally obtain a fused audio encoded representation $\underline{h_i^x}$. The above operation is performed on each frame of vectors outputted from the audio encoder to obtain the fourth feature vector sequence $\overline{H}^x$. A main objective of the frame-level attention module is to add audio information of the hot words in the predetermined hot-word bank to the audio during the encoding process, which is more conducive to an accuracy of hot word decoding by the decoding module.

In step 105, a decoding operation is performed based on the second feature vector sequence, the third feature vector sequence and the fourth feature vector sequence to obtain a recognition result.

In a specific implementation, the electronic device may input the second feature vector sequence, the third feature vector sequence and the fourth feature vector sequence to the decoder for a decoding operation to obtain the recognition result. Alternatively, the electronic device may first perform a second attention operation on the second feature vector sequence, the third feature vector sequence and the fourth feature vector sequence, and then input a result of the second attention operation to the decoder for a decoding operation to obtain the recognition result. The decoder may include multiple neural network layers. The decoding operation may be a Beam Search decoding, or other decoding methods, which is not described here.

In an embodiment of the present disclosure, before step 101, a large amount of speech data with text annotation may be collected and speech features may be extracted. The speech features may be at least one of: PLP, MFCC, FilterBank, or the like, without any limitation here. The speech data with text annotation collected here may be used to train the hot-word audio encoder module. A speech feature sequence and a text annotation sequence for particular speech data may be represented as follows:

a speech feature sequence $\mathbf{X} = [x_1, x_2, \cdots\cdots, x_k, \cdots\cdots, x_K]$; and

a text annotation sequence $\mathbf{Y} = [y_0, y_1, \cdots\cdots, y_t, \cdots\cdots, y_T]$.

In the representations, Xk represents the k-th speech feature vector in the speech feature sequence X, K represents a total number of speech frames, $y_t$ represents the t-th character in the text annotation sequence Y, T+1 represents a total number of characters in the overall text annotation, $y_0$ represents a sentence start character "<s>", and $y_T$ represents a sentence end character "</s>". For example, in recognition of a Japanese speech, a single character is used as a modeling unit. Assuming that a text content of a sentence is "今日は東京は風が強い", having ten characters, then additionally with the sentence start character and the sentence end character, the text annotation sequence has twelve characters in total, that is, Y=[<s>, 今，日，は，東，京，は，風，が，強，い，</s>].

In a specific implementation, the speech recognition model may have an ability of supporting recognition of an arbitrary hot word, which suggests that the hot word cannot be limited in training of the model. Therefore, in an embodiment of the present disclosure, an annotated segment may be randomly selected from text annotations of the training data and used as a hot word to participate in the overall training of the model. The following description is made by taking a case that the model is trained once with B sentences of speech data as an example, where B is an integer greater than 1. For example, two parameters P and N may be set, where P represents a probability of whether a hot word is selected from a sentence of training data, and N represents the maximum number of characters of the selected hot word. In an embodiment of the present disclosure, P may be set to 0.5 and N may be set to 4. That is, a sentence of training data has a 50% probability of being selected, and up to four consecutive characters are selected from the text annotation of this sentence of training data as a hot word. For example, a comparison of annotations before and after the hot word is selected from the sentence "今日は東京は風が強い" is shown in the following table:

| Original annotation | <s> | 今 | 日 | は | 東 | 京 | は | ... | |
|---|---|---|---|---|---|---|---|---|---|
| After "東京" is selected as a hot word | <s> | 今 | 日 | は | 東 | 京 | <bias> | は | ... |

In a case that "東" and "京" in the original annotations are selected as hot words, a special marker "<bias>" may be added after the hot words. The " <bias> " is to introduce a training error to force the model to update a model parameter associated with the hot word in the training, such as, a model parameter of the hot-word audio encoder module or a model parameter of the hot-word text encoder module. After the "東" and "京" are selected as the hot words, they can be added to a list of hot words for the model updating as an input to the hot-word audio encoder module or the hot-word text encoder module. The hot word selection process is carried out independently in each model updating, and the list of hot words may be empty at an initial time instant. After the data are processed, the model parameter may be updated using a neural network optimization method. In the training stage, sample data and a real recognition result corresponding to the sample data are obtained, the sample data may be encoded to obtain a first feature vector sequence. Hot words in the predetermined hot-word bank are encoded to obtain a second feature vector sequence. An audio segment of each hot word in the predetermined hot-word bank is encoded to obtain a third feature vector sequence. The first attention operation is performed on the first feature vector sequence and the third feature vector sequence to obtain a fourth feature vector sequence. The decoding operation is performed based on the second feature vector sequence, the third feature vector sequence and the fourth feature vector sequence to obtain a predicted recognition result. The model parameter is updated based on a deviation between the real recognition result and the predetermined recognition result.

In an embodiment, the step 105 of performing the decoding operation based on the second feature vector sequence, the third feature vector sequence and the fourth feature vector sequence to obtain the recognition result may include the following sub-steps A51 and A52.

In A51, a second attention operation is performed on the second feature vector sequence, the third feature vector sequence and the fourth feature vector sequence to obtain a hot-word text contextual feature vector sequence, a hot-word audio contextual feature vector sequence and an audio contextual feature vector sequence.

In A52, the hot-word text contextual feature vector sequence, the hot-word audio contextual feature vector sequence and the audio contextual feature vector sequence are inputted to a decoder for a decoding operation to obtain the recognition result.

The electronic device may perform the second attention operation on the second feature vector sequence, the third feature vector sequence and the fourth feature vector sequence to obtain the hot-word text contextual feature vector sequence, the hot-word audio contextual feature vector sequence and the audio contextual feature vector sequence. The word-level attention module is configured to extract, at each decoding time instant, an audio-related feature vector and a hot-word-related feature vector required for the decoding time instant from an audio feature vector sequence, a hot-word text feature vector sequence and a hot-word audio feature vector sequence. For example, when predicting the t-th character, the model may consider that the audio-related feature vector represents the audio content of a to-be-decoded character at the t-th time instant, a hot word text-related feature vector represents a possible hot word text content at the t-th time instant, and a hot word audio-related feature vector represents a possible hot word audio content at the t-th time instant.

In terms of the word-level attention mechanism, the attention mechanism may perform the attention mechanism operation on a feature vector sequence by using a vector as a query, to select a feature vector that matches the query best as an output. In an example, a matching coefficient is calculated based on the query and each feature vector in the feature vector sequence. The matching coefficients are multiplied with the feature vectors correspondingly and the multiplication results are summed up to obtain a new feature vector. , which matches the query best.

In an embodiment, the A51 of performing the second attention operation on the second feature vector sequence, the third feature vector sequence and the fourth feature vector sequence to obtain the hot-word text contextual feature vector sequence, the hot-word audio contextual feature vector sequence and the audio contextual feature vector sequence includes the following sub-steps A511 to A514.

In A511, a first state feature vector of the decoder at a current time instant is obtained.

In A512, an attention operation is performed on the second feature vector sequence based on the first state feature vector to obtain the hot-word text contextual feature vector sequence at the current time instant.

In step A513, an attention operation is performed on the third feature vector sequence based on the first state feature vector to obtain the hot-word audio contextual feature vector sequence at the current time instant.

In step A514, an attention operation is performed on the fourth feature vector sequence based on the first state feature vector to obtain the audio contextual feature vector sequence at the current time instant.

In a specific implementation, assuming that the first state feature vector of the decoder at the current time instant is $d_t$, an attention mechanism operation under the attention mechanism as described above may be performed, by using $d_t$ as a query, on the fourth feature vector sequence $\overline{\mathbf{H}}^x$ outputted by the frame-level attention module, to obtain the audio contextual feature vector sequence $c_t^x$. Due to the involvement of the hot word in the calculation of the $\overline{\mathbf{H}}^x$, the $\overline{\mathbf{H}}^x$ includes complete audio information of a potential hot word. In addition, the $c_t^x$ calculated in this way includes information on whether or not a hot word is included and which hot word is specifically included. Similarly, an attention mechanism operation may be performed on a second feature vector sequence $\mathbf{H}^z$ outputted by the hot-word text encoding module by using the $d_t$ as a query, so as to obtain the hot-word text contextual feature vector sequence $c_t^z$. Similarly, an attention mechanism operation may be performed on a third feature vector sequence $\mathbf{H}^w$ outputted by the hot-word audio encoding module by using $d_t$ as a query, so as to obtain the hot-word audio contextual feature vector sequence $c_t^w$.

Further, after $c_t^x$, $c_t^z$ and $c_t^w$ are obtained, the three vectors may be concentrated and inputted to the decoder module for decoding at the time instant t. Addition of the $c_t^w$ that includes the hot-word audio information corresponding to the hot words in the predetermined hot-word bank is more conducive to improving the accuracy of hot word decoding.

In another implementation, a second attention operation may be performed, based on the first feature vector sequence, on the second feature vector sequence, the third feature vector sequence and the fourth feature vector sequence, to obtain the hot-word text contextual feature vector sequence, the hot-word audio contextual feature vector sequence and the audio contextual feature vector sequence, respectively.

Further, in an embodiment, the decoder includes a first unidirectional long short-term memory layer, and the A511 of obtaining the first state feature vector of the decoder at a first historical time instant may include the following sub-steps A5111 and A5112.

In A5111, a recognition result at the first historical time instant, the hot-word text contextual feature vector sequence at the first historical time instant, the hot-word audio contextual feature vector sequence at the first historical time instant and the audio contextual feature vector sequence at the first historical time instant are obtained.

In A5112, the recognition result at the first historical time instant, the hot-word text contextual feature vector sequence at the first historical time instant, the hot-word audio contextual feature vector sequence at the first historical time instant and the audio contextual feature vector sequence at the first historical time instant are inputted to the first unidirectional long short-term memory layer to obtain the first state feature vector.

The first historical time instant is at least one time instant earlier than the current time instant, that is, the first historical time instant may be a time instant previous to the current time instant, or may be multiple time instants before the current time instant. The decoder may include two unidirectional long short-term memory layers, which may include a first unidirectional long short-term memory layer and a second unidirectional long short-term memory layer. In a specific implementation, the electronic device may obtain and input the recognition result of the decoder at the first historical time instant, the hot-word text contextual feature vector sequence at the first historical time instant, the hot-word audio contextual feature vector sequence at the first historical time instant and the audio contextual feature vector sequence at the first historical time instant to the first unidirectional long short-term memory layer to obtain the first state feature vector. Then, a memory (feature) fusion is performed on the recognition result at the first historical time instant and the corresponding input, so that a prediction capability of the model is improved.

In a specific implementation, the hot-word text contextual feature vector sequence, the hot-word audio contextual feature vector sequence and the audio contextual feature vector sequence at the first historical time instant may be obtained through the following method. The first state feature vector of the decoder is obtained at the first historical time instant. An attention operation is performed on the second feature vector sequence based on the first state feature vector to obtain the hot-word text contextual feature vector sequence at the first historical time instant. An attention operation is performed on the third feature vector sequence based on the first state feature vector to obtain the hot-word audio contextual feature vector sequence at the first historical time instant. An attention operation is performed on the fourth feature vector sequence based on the first state feature vector to obtain the audio contextual feature vector sequence at the first historical time instant. For example, assuming the first state feature vector $d_{t-1}$ of the decoder at the first historical time instant, the attention operation may be performed on the second feature vector sequence, the third feature vector sequence, and the fourth feature vector sequence which are inputted at the first historical time instant by using the $d_{t-1}$ as a query. The $d_{t-1}$ may be the first state feature vector obtained from inputting a recognition result at a second historical time instant, the hot-word text contextual feature vector at the second historical time instant, the hot-word audio contextual feature vector sequence at the second historical time instant and the audio contextual feature vector sequence at the second historical time instant to the first unidirectional long short-term memory layer. The second historical time instant may be at least one time instant earlier than the first historical time instant, that is, the second historical time instant may be a time instant previous to the first historical time instant or multiple time instants before the first historical time instant.

In another implementation, the first state feature vector may be obtained from inputting all or some of recognition results prior to the current time instant and the hot-word text contextual feature vector sequence, the hot-word audio contextual feature vector sequence and the audio contextual feature vector sequence which are inputted to the decoder at the first historical time instant to the first unidirectional long short-term memory layer. Then, the hot-word text contextual feature vector sequence, the hot-word audio contextual feature vector sequence and the audio contextual feature vector sequence which are inputted to the decoder at the current time instant are inputted to the second unidirectional long short-time memory layer to obtain the recognition result at the current time instant.

In an embodiment, the decoder includes a second unidirectional long short-time memory layer, and the A52 of inputting the hot-word text contextual feature vector sequence, the hot-word audio contextual feature vector sequence and the audio contextual feature vector sequence to the decoder for the decoding operation to obtain the recognition result may include: inputting the hot-word text contextual feature vector sequence, the hot-word audio contextual feature vector sequence and the audio contextual feature vector sequence which are inputted to the decoder at a current time instant to the second unidirectional long short-term memory layer to obtain the recognition result at the current time instant. The hot-word text contextual feature vector sequence at the current time instant, the hot-word audio contextual feature vector sequence at the current time instant, and the audio contextual feature vector sequence at the current time instant are obtained by performing, based on the first state feature vector, the second attention operation on the second feature vector sequence at the current time instant, the third feature vector sequence at the current time instant, and the fourth feature vector sequence at the current time instant, respectively.

In a specific implementation, the current time instant may be understood as a current decoding time instant. For example, the first historical time instant is a time instant previous to the current time instant. When decoding the t-th word, the time instant previous to the current time instant, i.e., the time instant when decoding the (t-1)-th word, is the first historical time instant. The decoder may include two unidirectional long short-term memory layers. Taking the t-th character (time instant) as an example, when decoding the t-th character, a recognition result character $y_{t-1}$ at the time instant t-1 and the output vector $c_{t-1}$ of the word-level attention module (the hot-word text contextual feature vector sequence, the hot-word audio contextual feature vector sequence and the audio contextual feature vector sequence which are inputted to the decoder at the time instant of the (t-1)-th character) are inputted to the first long short-term memory layer to calculate the first state feature vector $d_t$ of the decoder. The $d_t$ is inputted to the word-level attention module to calculate an output $c_t$ of the word-level attention module at the time instant t. The $c_t$ is the hot-word text contextual feature vector sequence at the time instant t, the hot-word audio contextual feature vector sequence at the time instant t and the audio contextual feature vector sequence at the time instant t. Then, the $c_t$ is inputted to the second long short-term memory layer to calculate an output $h_t^d$ of the decoder. Finally, calculation of a posteriori probability of the output character is performed, and thereby the recognition result is obtained.

Based on the above embodiments of the present disclosure, in addition to the hot-word textual information, the speech segment of the hot word are inputted as additional incentive source, the input of a combination of the hot-word text and the speech segment effectively enriches input information of the hot word, which significantly improves the incenting effect for the hot word. In addition, with the two-layer incenting, i.e., twice of the attention operation, the incenting effect for the hot word is significantly improved. The double inputs and the two-level hot word incenting scheme complement each other and collectively improve the effect of hot-word recognition. Thereby, the accuracy of hot-word recognition is improved.

In an embodiment, the step 105 of performing the decoding operation based on the second feature vector sequence, the third feature vector sequence and the fourth feature vector sequence to obtain the recognition result may be implemented by: inputting the second feature vector sequence, the third feature vector sequence and the fourth feature vector sequence to the decoder for the decoding operation to obtain the recognition result.

In a specific implementation, the electronic device may input the second feature vector sequence, the third feature vector sequence and the fourth feature vector sequence directly to the decoder for decoding operation to obtain the recognition result. The textual information of the hot words, the audio segments corresponding to the hot words, and the fusion of the to-be-recognized speech data and the audio segments of the textual information of the hot words obtained from the attention operation are used as the input. Therefore the incenting effect for the hot words can be significantly improved. With the decoding operation on the textual information of the hot word, the audio segment, and the fusion of the to-be recognized speech data and the audio segment, the effect of hot-word recognition can be improved. Thereby, the accuracy of the hot-word recognition is improved.

Further, in an embodiment, the decoder includes two unidirectional long short-term memory layers, i.e., a first unidirectional long short-term memory layer and a second unidirectional long short-term memory layer, and the step of inputting the second feature vector sequence, the third feature vector sequence and the fourth feature vector sequence to the decoder for the decoding operation to obtain the recognition result may include the following sub-steps B51 to B53.

In B51, the recognition result at a first historical time instant is obtained, and the second feature vector sequence, the third feature vector sequence and the fourth feature vector sequence which are inputted to the decoder at the first historical time instant are obtained.

In B52, the recognition result at the first historical time instant, the second feature vector sequence, the third feature vector sequence and the fourth feature vector sequence which are inputted to the decoder at the first historical time instant are inputted to the first unidirectional long short-term memory layer to obtain the second state feature vector.

In B53, the second feature vector sequence, the third feature vector sequence and the fourth feature vector sequence which are inputted to the decoder at a current time instant are inputted to the second unidirectional long short-term memory layer to obtain the recognition result at the current time instant, where the fourth feature vector sequence is obtained by performing, based on the second state feature vector, the first attention operation on the first feature vector sequence at the current time and the third feature vector sequence at the current time instant.

The decoder may include multiple neural network layers. For example, the decoder may include two unidirectional long short-term memory layers, i.e., a first unidirectional long short-term memory layer and a second unidirectional long short-term memory layer.

In a specific implementation, the electronic device may obtain the recognition result at the first historical time instant and the second feature vector sequence, the third feature vector sequence and the fourth feature vector sequence which are inputted to the decoder at the first historical time instant, and input the recognition result at the first historical time instant and the above sequences to the first unidirectional long short-term memory layer to obtain the second state feature vector. The second feature vector sequence, the third feature vector sequence and the fourth feature vector sequence which are inputted to the decoder at the current time instant are inputted to the second unidirectional long short-term memory layer to obtain the recognition result at the current time instant. The fourth feature vector sequence may be obtained by performing a first attention operation, based on the second state feature vector, on at least one of the first feature vector sequence at the current time instant or the third feature vector sequence at the current time instant. For example, the first attention operation may be performed on the first feature vector sequence at the current time instant and the third feature vector sequence at the current time instant based on the second state feature vector. Thereby, an output content of the second unidirectional long short-term memory layer of the decoder may be obtained. Calculation of a posteriori probability of the output content may be performed to obtain a final decoded result, i.e. the recognition result at the current time instant.

It can be seen that with the speech recognition method described in the embodiments of the present disclosure, the to-be-recognized speech data is encoded to obtain the first feature vector sequence; each hot word in the predetermined hot-word bank is encoded to obtain the second feature vector sequence; the audio segment of each hot word in the predetermined hot-word bank is encoded to obtain the third feature vector sequence; the first attention operation is performed on the first feature vector sequence and the third feature vector sequence to obtain the fourth feature vector sequence; and the decoding operation is performed based on the second feature vector sequence, the third feature vector sequence and the fourth feature vector sequence to obtain the recognition result. The textual information of the hot word, the audio segments corresponding to the hot word, and the fusion of the to-be-recognized speech data and the audio segments of the textual information of the hot word obtained from the attention operation are used as the input. Therefore the incenting effect for the hot word can be significantly improved. With the decoding operation on the textual information of the hot word, the audio segment, and the fusion of the to-be recognized speech data and the audio segment, the effect of hot-word recognition can be improved. Thereby, the accuracy of the hot-word recognition is improved.

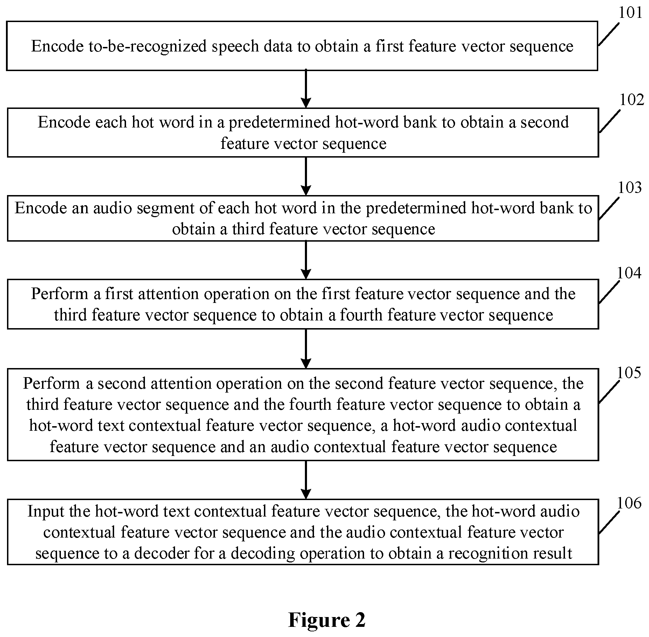

Consistently with the embodiment shown in Figure 1B, Figure 2 is a schematic flow chart of a speech recognition method according to an embodiment of the present disclosure. Reference is made to Figure 2. The speech recognition method as shown in Figure 2 is applied to the speech recognition model shown in Figure 1A, which is applied to an electronic device. The speech recognition method includes the following steps 201 to 206.

In 201, to-be-recognized speech data is encoded to obtain a first feature vector sequence.

In 202, each hot word in a predetermined hot-word bank is encoded to obtain a second feature vector sequence.

In 203, an audio segment of each hot word in the predetermined hot-word bank is encoded to obtain a third feature vector sequence.

In 204, a first attention operation is performed on the first feature vector sequence and the third feature vector sequence to obtain a fourth feature vector sequence.

In 205, a second attention operation is performed on the second feature vector sequence, the third feature vector sequence and the fourth feature vector sequence to obtain a hot-word text contextual feature vector sequence, a hot-word audio contextual feature vector sequence and an audio contextual feature vector sequence.

In 206, the hot-word text contextual feature vector sequence, the hot-word audio contextual feature vector sequence and the audio contextual feature vector sequence are inputted to a decoder for a decoding operation to obtain a recognition result.

Detailed descriptions of the steps 201 to 206 may be referred to the corresponding steps of the speech recognition method as described in Figure 1B, and are not repeated here.

In the speech recognition method described in the embodiments of the present disclosure, in addition to the hot-word textual information, the speech segment of the hot word are inputted as additional incentive source, the input of a combination of the hot-word text and the speech segment effectively enriches input information of the hot word, which significantly improves the incenting effect for the hot word. In addition, with the two-layer incenting, i.e., twice of the attention operation, the incenting effect for the hot word is significantly improved. The double inputs and the two-level hot word incenting scheme complement each other and collectively improve the effect of hot-word recognition. Thereby, the accuracy of hot-word recognition is improved..

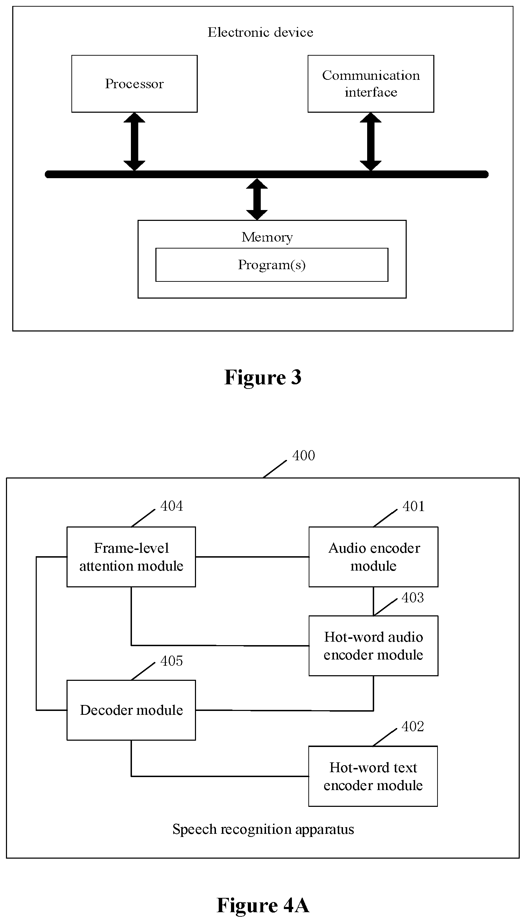

Consistently with the above embodiment, Figure 3 is a schematic structural diagram of an electronic device according to an embodiment of the present disclosure. Reference is made to Figure 3. The electronic device as shown in Figure 3 includes a processor, a memory, a communication interface, and at least one program. The at least one program is stored in the memory and are configured to be executed by the processor. In an embodiment of the present disclosure, the program includes instructions for executing the steps of: encoding to-be-recognized speech data to obtain a first feature vector sequence; encoding each hot word in a predetermined hot-word bank to obtain a second feature vector sequence; encoding an audio segment of each hot word in the predetermined hot-word bank to obtain a third feature vector sequence; performing a first attention operation on the first feature vector sequence and the third feature vector sequence to obtain a fourth feature vector sequence; and performing a decoding operation based on the second feature vector sequence, the third feature vector sequence and the fourth feature vector sequence to obtain a recognition result.

As can be seen, with the electronic device described in the embodiments of the present disclosure, the to-be-recognized speech data is encoded to obtain the first feature vector sequence; each hot word in the predetermined hot-word bank is encoded to obtain the second feature vector sequence; the audio segment of each hot word in the predetermined hot-word bank is encoded to obtain the third feature vector sequence; the first attention operation is performed on the first feature vector sequence and the third feature vector sequence to obtain the fourth feature vector sequence; and the decoding operation is performed based on the second feature vector sequence, the third feature vector sequence and the fourth feature vector sequence to obtain the recognition result. The textual information of the hot word, the audio segments corresponding to the hot word, and the fusion of the to-be-recognized speech data and the audio segments of the textual information of the hot word obtained from the attention operation are used as the input. Therefore the incenting effect for the hot word can be significantly improved. With the decoding operation on the textual information of the hot word, the audio segment, and the fusion of the to-be recognized speech data and the audio segment, the effect of hot-word recognition can be improved. Thereby, the accuracy of the hot-word recognition is improved.

In an embodiment, in terms of the performing a first attention operation on the first feature vector sequence and the third feature vector sequence to obtain a fourth feature vector sequence, the program includes instructions for executing the following steps: performing a matching operation on each of first feature vectors in the first feature vector sequence and each of third feature vectors in the third feature vector sequence to obtain matching coefficients corresponding to the third feature vectors; performing an operation on the matching coefficients corresponding to the third feature vectors and the third feature vectors correspondingly to obtain new feature vectors corresponding to the third feature vectors; and concatenating the new feature vectors corresponding to the third feature vectors with the first feature vectors correspondingly to obtain representation vectors corresponding to the third feature vectors as the fourth feature vector sequence.

In an embodiment, in terms of the performing a decoding operation based on the second feature vector sequence, the third feature vector sequence and the fourth feature vector sequence to obtain a recognition result, the program includes instructions for executing the following steps: performing a second attention operation on the second feature vector sequence, the third feature vector sequence and the fourth feature vector sequence to obtain a hot-word text contextual feature vector sequence, a hot-word audio contextual feature vector sequence and an audio contextual feature vector sequence; and inputting the hot-word text contextual feature vector sequence, the hot-word audio contextual feature vector sequence and the audio contextual feature vector sequence to a decoder for a decoding operation to obtain a recognition result.

In an embodiment, in terms of the performing a second attention operation on the second feature vector sequence, the third feature vector sequence and the fourth feature vector sequence to obtain a hot-word text contextual feature vector sequence, a hot-word audio contextual feature vector sequence and an audio contextual feature vector sequence, the program includes instructions for executing the following steps: obtaining a first state feature vector of the decoder at a current time instant; performing an attention operation on the second feature vector sequence based on the first state feature vector to obtain the hot-word text contextual feature vector sequence at the current time instant; performing an attention operation on the third feature vector sequence based on the first state feature vector to obtain the hot-word audio contextual feature vector sequence at the current time instant; and performing an attention operation on the fourth feature vector sequence based on the first state feature vector to obtain the audio contextual feature vector sequence at the current time instant.

In an embodiment, the decoder includes a first unidirectional long short-term memory layer, and in terms of the obtaining a first state feature vector of the decoder at a first historical time instant, the program includes instructions for executing the following steps: obtaining a recognition result at a first historical time instant, the hot-word text contextual feature vector sequence at the first historical time instant, the hot-word audio contextual feature vector sequence at the first historical time instant and the audio contextual feature vector sequence at the first historical time instant; and inputting, to the first unidirectional long short-term memory layer, the recognition result at the first historical time instant, the hot-word text contextual feature vector sequence at the first historical time instant, the hot-word audio contextual feature vector sequence at the first historical time instant and the audio contextual feature vector sequence at the first historical time instant to obtain the first state feature vector.

In an embodiment, the decoder includes a second unidirectional long short-term memory layer, and in terms of the inputting the hot-word text contextual feature vector sequence, the hot-word audio contextual feature vector sequence and the audio contextual feature vector sequence to a decoder for a decoding operation to obtain a recognition result, the program includes instructions for executing the following step: inputting the hot-word text contextual feature vector sequence, the hot-word audio contextual feature vector sequence and the audio contextual feature vector sequence which are inputted to the decoder at a current time instant to the second unidirectional long short-term memory layer to obtain a recognition result at the current time instant, where the hot-word text contextual feature vector sequence at the current time instant, the hot-word audio contextual feature vector sequence at the current time instant and the audio contextual feature vector sequence at the current time instant are obtained by performing, based on a first state feature vector, the second attention operation on the second feature vector sequence at the current time instant, the third feature vector sequence at the current time instant and the fourth feature vector sequence at the current time instant, respectively.

In an embodiment, in terms of performing the decoding operation based on the second feature vector sequence, the third feature vector sequence and the fourth feature vector sequence to obtain the recognition result, the program includes instructions for executing the following step: inputting the second feature vector sequence, the third feature vector sequence and the fourth feature vector sequence to a decoder for a decoding operation to obtain the recognition result.

In an embodiment, the decoder includes two unidirectional long short-term memory layers, which are a first unidirectional long short-term memory layer and a second unidirectional long short-term memory layer, and in terms of inputting the second feature vector sequence, the third feature vector sequence and the fourth feature vector sequence to the decoder for the decoding operation to obtain the recognition result, the program includes instructions for executing the following steps: obtaining a recognition result at a first historical time instant, and the second feature vector sequence, the third feature vector sequence and the fourth feature vector sequence which are inputted to the decoder at the first historical time instant; inputting, to the first unidirectional long short-term memory layer, the recognition result at the first historical time instant, the second feature vector sequence, the third feature vector sequence and the fourth feature vector sequence which are inputted to the decoder at the first historical time instant, to obtain a second state feature vector from; and inputting the second feature vector sequence, the third feature vector sequence and the fourth feature vector sequence which are inputted to the decoder at a current time instant to the second unidirectional long short-term memory layer to obtain a recognition result at the current time instant, where the fourth feature vector sequence is obtained by performing, based on the second state feature vector, the first attention operation on the first feature vector sequence at the current time instant and the third feature vector sequence at the current time instant.

In an embodiment, a process of encoding the audio segment of each of hot words in the predetermined hot-word bank to obtain the third feature vector sequence includes: encoding the audio segment of each hot word in the predetermined hot-word bank through at least one encoding layer to obtain the third feature vector sequence, where the encoding layer comprises a long short-term memory layer in a long short-term memory neural network or a convolutional layer in a convolutional neural network, and the long short-term memory layer is in an unidirectional long short-term memory neural network or a bidirectional-based long short-term memory neural network.

Hereinabove the solution of the embodiments of the present disclosure are described mainly from a view of execution on a method side. It should be understood that the electronic device, in order to implement the above-mentioned functions, includes hardware structures and/or software modules that perform the respective functions. Those skilled in the art should easily realize that the present disclosure can be implemented in the form of hardware or a combination of hardware and computer software in combination with the units and algorithmic steps of the various examples described in the embodiments provided herein. Whether a function is to be performed by hardware or by hardware driven by computer software depends on a specific application and design constraints of the technical solution. Those skilled in the art may use different methods to implement the described functions for each particular application, and such implementation should not be regarded as going beyond the scope of the present disclosure.

In the embodiments of the present disclosure, the electronic device may be divided into functional units based on the above method examples. For example, the functional units are divided according to functions, or two or more functions may be integrated into a processing unit. The above-mentioned integrated units may be implemented in the form of hardware or in the form of software functional unit. It should be noted that the division of units in the embodiments of the present disclosure is schematic, which is only a logical function division, and the division may be in other forms in actual implementation.

Figure 4A is a block diagram of functional units of a speech recognition apparatus 400 according to an embodiment of the present disclosure. The speech recognition apparatus 400 is applied to an electronic device. The speech recognition apparatus 400 includes: an audio encoder module 401, a hot-word text encoder module 402, a hot-word audio encoder module 403, a frame-level attention module 404 and a decoder module 405.

The audio encoder module 401 is configured to encode to-be-recognized speech data to obtain a first feature vector sequence.

The hot-word text encoder module 402 is configured to encode each hot word in a predetermined hot-word bank to obtain a second feature vector sequence.

The hot-word audio encoder module 403 is configured to encode an audio segment of each hot word in the predetermined hot-word bank to obtain a third feature vector sequence.

The frame-level attention module 404 is configured to perform a first attention operation on the first feature vector sequence and the third feature vector sequence to obtain a fourth feature vector sequence.

The decoder module 405 is configured to perform a decoding operation based on the second feature vector sequence, the third feature vector sequence and the fourth feature vector sequence to obtain a recognition result.

As can be seen, with the speech recognition apparatus described in the embodiments of the present disclosure, the to-be-recognized speech data is encoded to obtain the first feature vector sequence; each hot word in the predetermined hot-word bank is encoded to obtain the second feature vector sequence; the audio segment of each hot word in the predetermined hot-word bank is encoded to obtain the third feature vector sequence; the first attention operation is performed on the first feature vector sequence and the third feature vector sequence to obtain the fourth feature vector sequence; and the decoding operation is performed based on the second feature vector sequence, the third feature vector sequence and the fourth feature vector sequence to obtain the recognition result. The textual information of the hot word, the audio segments corresponding to the hot word, and the fusion of the to-be-recognized speech data and the audio segments of the textual information of the hot word obtained from the attention operation are used as the input. Therefore the incenting effect for the hot word can be significantly improved. With the decoding operation on the textual information of the hot word, the audio segment, and the fusion of the to-be recognized speech data and the audio segment, the effect of hot-word recognition can be improved. Thereby, the accuracy of the hot-word recognition is improved.

In an embodiment, in terms of performing the first attention operation on the first feature vector sequence and the third feature vector sequence to obtain the fourth feature vector sequence, the frame-level attention module 404 is specifically configured to: perform a matching operation on each of first feature vectors in the first feature vector sequence and each of third feature vectors in the third feature vector sequence to obtain matching coefficients corresponding to the third feature vectors; perform an operation on the matching coefficients corresponding to the third feature vectors and the third feature vectors correspondingly to obtain new feature vectors corresponding to the third feature vectors; and concatenate the new feature vectors corresponding to the third feature vectors with the first feature vectors correspondingly to obtain representation vectors corresponding to the third feature vectors as the fourth feature vector sequence.

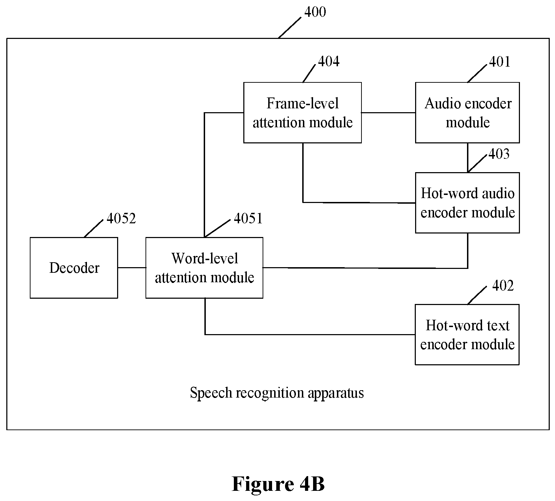

Figure 4B is a variant structure of the speech recognition apparatus as shown in Figure 4A. In an embodiment, in comparison with Figure 4A, the decoder module 405 as shown in Figure 4B may include a word-level attention module 4051 and a decoder 4052.

The word-level attention module 4051 is configured to perform a second attention operation on the second feature vector sequence, the third feature vector sequence and the fourth feature vector sequence to obtain a hot-word text contextual feature vector sequence, a hot-word audio contextual feature vector sequence and an audio contextual feature vector sequence.

The decoder 4052 is configured to input the hot-word text contextual feature vector sequence, the hot-word audio contextual feature vector sequence and the audio contextual feature vector sequence to a decoder for a decoding operation to obtain the recognition result.

In an embodiment, in terms of performing the second attention operation on the second feature vector sequence, the third feature vector sequence and the fourth feature vector sequence to obtain the hot-word text contextual feature vector sequence, the hot-word audio contextual feature vector sequence and the audio contextual feature vector sequence, the word-level attention module 4051 is specifically configured to: obtain a first state feature vector of the decoder at a current time instant; perform an attention operation on the second feature vector sequence based on the first state feature vector to obtain the hot-word text contextual feature vector sequence at the current time instant; perform an attention operation on the third feature vector sequence based on the first state feature vector to obtain the hot-word audio contextual feature vector sequence at the current time instant; and perform an attention operation on the fourth feature vector sequence based on the first state feature vector to obtain the audio contextual feature vector sequence at the current time instant.

In an embodiment, the decoder includes a first unidirectional long short-term memory layer, and in terms of obtaining the first state feature vector of the decoder at a first historical time instant, the word-level attention module 4051 is specifically configured to: obtain a recognition result at a first historical time instant, the hot-word text contextual feature vector sequence at the first historical time instant, the hot-word audio contextual feature vector sequence at the first historical time instant and the audio contextual feature vector sequence at the first historical time instant; and input, to the first unidirectional long short-term memory layer, the recognition result at the first historical time instant, the hot-word text contextual feature vector sequence at the first historical time instant, the hot-word audio contextual feature vector sequence at the first historical time instant and the audio contextual feature vector sequence at the first historical time instant, obtain the first state feature vector.

In an embodiment, the decoder includes a second unidirectional long short-term memory layer, and in terms of inputting the hot-word text contextual feature vector sequence, the hot-word audio contextual feature vector sequence and the audio contextual feature vector sequence to the decoder for the decoding operation to obtain the recognition result, the encoder 4052 is further configured to: input the hot-word text contextual feature vector sequence, the hot-word audio contextual feature vector sequence and the audio contextual feature vector sequence, which are inputted to the decoder at a current time instant, to the second unidirectional long short-term memory layer, to obtain the recognition result at the current time instant, where the hot-word text contextual feature vector sequence at the current time instant, the hot-word audio contextual feature vector sequence at the current time instant and the audio contextual feature vector sequence at the current time instant are obtained by performing, based on a first state feature vector, the second attention operation on the second feature vector sequence at the current time instant, the third feature vector sequence at the current time instant and the fourth feature vector sequence at the current time instant, respectively.

In an embodiment, in terms of performing the decoding operation based on the second feature vector sequence, the third feature vector sequence and the fourth feature vector sequence to obtain the recognition result, the encoder module 405 is specifically configured to: input the second feature vector sequence, the third feature vector sequence and the fourth feature vector sequence to a decoder for a decoding operation to obtain the recognition result.

In an embodiment, the decoder includes two unidirectional long short-term memory layers, which are a first unidirectional long short-term memory layer and a second unidirectional long short-term memory layer, and in terms of inputting the second feature vector sequence, the third feature vector sequence and the fourth feature vector sequence to the decoder for the decoding operation to obtain the recognition result, the encoder module 405 is specifically configured to: obtain a recognition result at a first historical time instant, and the second feature vector sequence, the third feature vector sequence and the fourth feature vector sequence which are inputted to the decoder at the first historical time instant; input, to the first unidirectional long short-term memory layer, the recognition result at the first historical time instant, the second feature vector sequence, the third feature vector sequence and the fourth feature vector sequence which are inputted to the decoder at the first historical time instant, to obtain a second state feature vector; and input the second feature vector sequence, the third feature vector sequence and the fourth feature vector sequence which are inputted to the decoder at a current time instant to the second unidirectional long short-term memory layer to obtain a recognition result at the current time instant, wherein the fourth feature vector sequence is obtained by performing, based on the second state feature vector, the first attention operation on the first feature vector sequence at the current time instant and the third feature vector sequence at the current time instant.

In an embodiment, in terms of encoding the audio segment of each hot word in the predetermined hot-word bank to obtain the third feature vector sequence, the hot-word audio encoder module 403 is specifically configured to: encode the audio segment of each hot word in the predetermined hot-word bank through at least one encoding layer to obtain the third feature vector sequence, where the encoding layer comprises a long short-term memory layer in a long short-term memory neural network or a convolutional layer in a convolutional neural network, and the long short-term memory layer is in an unidirectional long short-term memory neural network or a bidirectional-based long short-term memory neural network.

It will be understood that the functions of program modules of the speech recognition apparatus according to the embodiments can be specifically implemented according to the methods in the method embodiments described above. Specific implementations of the functions may be referred to relevant description of the method embodiments and are not repeated here.

A computer storage medium is further provided according to an embodiment of the present disclosure. The computer storage medium stores a computer program for electronic data interchange. The computer program causes a computer to implement some or all of the steps of any of the method as recited in any of the above method embodiments. The computer includes an electronic device.

A computer program product is further provided according to an embodiment of the present disclosure. The computer program product includes a non-transitory computer readable storage medium storing a computer program. The computer program is operable to cause a computer to implement some or all of the steps of the methods as recited in any of the method embodiments. The computer program product may be a software installation package. The computer includes an electronic device.

It should be noted that the above method embodiments are all expressed as a series of actions for brief description. Those skilled in the art should be aware that the present disclosure is not limited by the described order of the actions. According to the present disclosure, some steps may be performed in another order or in parallel. In addition, those skilled in the art should be aware that the embodiments described in the specification are preferred embodiments. The actions and modules in the embodiments are not necessary for the present disclosure.

In the above embodiments, descriptions of the embodiments have difference focuses. An aspect not described in detail in an embodiment may be referred to relevant description of another embodiment.

In the embodiments of the present disclosure, it should be understood that the disclosed apparatus may be implemented in other forms. For example, the apparatus embodiments described above are only schematic. For example, the units are determined merely based on logical functions, and may be determined in other forms in practice. For example, multiple units or components may be combined or integrated into another system, or some features may be omitted or not executed. In addition, the coupling, direct coupling or communication connection shown or discussed above may be an indirect coupling or communication connection through some interfaces, apparatuses or units, which may be electrical or in other forms.

Units described as separate components may be or may not be physically separated. Components shown as units may be or may not be physical units, that is, may be located in one location or may be distributed in multiple network units. Part or all of the units may be selected according to actual needs to achieve the object of the solution of this embodiment.

In addition, each functional unit in each embodiment of the present disclosure may be integrated into one processing unit, or each unit may exist separately physically, or two or more units may be integrated into one unit. The above-mentioned integrated units may be implemented in the form of hardware or in the form of software functional unit.

The integrated unit, when implemented in a form of a software functional unit and sold or used as an independent product, may be stored in a computer-readable memory. Based on such understanding, the essence of the technical solution of the present disclosure, i.e., essential part of the technical solution that makes contribution to the conventional technology or all of or a part of the technical solution may be embodied in a form of a software product. The computer software product is stored in a memory which includes several instructions used to cause a computer device (which may be a personal computer, a server, a network device or the like) to implement all or some of steps of the methods described in the embodiments according to the present disclosure. The memory includes various media capable of storing program codes, such as a USB flash disk, a read-only memory (ROM), a random access memory (RAM), a mobile disk, a magnetic disk or an optical disk.

Those skilled in the art can understand that all or some of the steps in the various methods according to the embodiments may be performed by instructing relevant hardware through a program. The program may be stored in a computer-readable memory, and the memory can include a flash disk, a read only memory (ROM), a random access memory (RAM), a disk, an optical disk and the like.

The embodiments of the present disclosure are described in detail above. The principle and the embodiments of the present disclosure are described herein in connection with examples. The embodiments are described to facilitate understanding of the method and the core idea of the present disclosure. In addition, those skilled in the art may make variation to the embodiments and the application range based on the idea of the present disclosure. In summary, this description should not be understood as limitation to the present disclosure.

## Claims

1. A speech recognition method, comprising:

    encoding (101) to-be-recognized speech data to obtain a first feature vector sequence;
    encoding (102) each hot word in a predetermined hot-word bank to obtain a second feature vector sequence;
    encoding (103) an audio segment of each hot word in the predetermined hot-word bank to obtain a third feature vector sequence;
    performing (104) a first attention operation on the first feature vector sequence and the third feature vector sequence to obtain a fourth feature vector sequence; and

performing (105) a decoding operation based on the second feature vector sequence, the third feature vector sequence and the fourth feature vector sequence to obtain a recognition result,

wherein the performing (105) a decoding operation based on the second feature vector sequence, the third feature vector sequence and the fourth feature vector sequence to obtain a recognition result comprises:

performing (205) a second attention operation on the second feature vector sequence, the third feature vector sequence and the fourth feature vector sequence to obtain a hot-word text contextual feature vector sequence, a hot-word audio contextual feature vector sequence and an audio contextual feature vector sequence; and

inputting (206) the hot-word text contextual feature vector sequence, the hot-word audio contextual feature vector sequence and the audio contextual feature vector sequence to a decoder for a decoding operation to obtain the recognition result.

2. The speech recognition method according to claim 1, wherein the performing (104) a first attention operation on the first feature vector sequence and the third feature vector sequence to obtain a fourth feature vector sequence comprises:

performing a matching operation on each of first feature vectors in the first feature vector sequence and each of third feature vectors in the third feature vector sequence to obtain matching coefficients corresponding to the third feature vectors;

performing an operation on the matching coefficients corresponding to the third feature vectors and the third feature vectors correspondingly to obtain new feature vectors corresponding to the third feature vectors; and

concatenating the new feature vectors corresponding to the third feature vectors with the first feature vectors correspondingly to obtain representation vectors corresponding to the third feature vectors as the fourth feature vector sequence.

3. The speech recognition method according to claim 1 or 2, wherein the performing (205) a second attention operation on the second feature vector sequence, the third feature vector sequence and the fourth feature vector sequence to obtain a hot-word text contextual feature vector sequence, a hot-word audio contextual feature vector sequence and an audio contextual feature vector sequence comprises:

obtaining a first state feature vector of the decoder at a current time instant;

performing an attention operation on the second feature vector sequence based on the first state feature vector to obtain the hot-word text contextual feature vector sequence at the current time instant;

performing an attention operation on the third feature vector sequence based on the first state feature vector to obtain the hot-word audio contextual feature vector sequence at the current time instant; and

performing an attention operation on the fourth feature vector sequence based on the first state feature vector to obtain the audio contextual feature vector sequence at the current time instant.

4. The speech recognition method according to claim 3, wherein the decoder comprises a first unidirectional long short-term memory layer, and the obtaining a first state feature vector of the decoder at a first historical time instant comprises:

obtaining a recognition result at a first historical time instant, the hot-word text contextual feature vector sequence at the first historical time instant, the hot-word audio contextual feature vector sequence at the first historical time instant and the audio contextual feature vector sequence at the first historical time instant; and

inputting, to the first unidirectional long short-term memory layer, the recognition result at the first historical time instant, the hot-word text contextual feature vector sequence at the first historical time instant, the hot-word audio contextual feature vector sequence at the first historical time instant and the audio contextual feature vector sequence at the first historical time instant, to obtain the first state feature vector.

5. The speech recognition method according to claim 1 or 2, wherein the decoder comprises a second unidirectional long short-term memory layer, and the inputting (206) the hot-word text contextual feature vector sequence, the hot-word audio contextual feature vector sequence and the audio contextual feature vector sequence to a decoder for a decoding operation to obtain a recognition result comprises:

inputting the hot-word text contextual feature vector sequence, the hot-word audio contextual feature vector sequence and the audio contextual feature vector sequence, which are inputted to the decoder at a current time instant, to the second unidirectional long short-term memory layer to obtain a recognition result at the current time instant, wherein

the hot-word text contextual feature vector sequence at the current time instant, the hot-word audio contextual feature vector sequence at the current time instant and the audio contextual feature vector sequence at the current time instant are obtained by performing, based on a first state feature vector, the second attention operation on the second feature vector sequence at the current time instant, the third feature vector sequence at the current time instant and the fourth feature vector sequence at the current time instant, respectively.

6. The speech recognition method according to claim 1, wherein the performing (105) a decoding operation based on the second feature vector sequence, the third feature vector sequence and the fourth feature vector sequence to obtain a recognition result comprises:
inputting the second feature vector sequence, the third feature vector sequence and the fourth feature vector sequence to a decoder for a decoding operation to obtain the recognition result.

7. The speech recognition method according to claim 6, wherein

the decoder comprises two unidirectional long short-term memory layers, which are a first unidirectional long short-term memory layer and a second unidirectional long short-term memory layer, and
the inputting the second feature vector sequence, the third feature vector sequence and the fourth feature vector sequence to a decoder for a decoding operation to obtain the recognition result comprises:

obtaining a recognition result at a first historical time instant, and the second feature vector sequence, the third feature vector sequence and the fourth feature vector sequence which are inputted to the decoder at the first historical time instant;
inputting, to the first unidirectional long short-term memory layer, the recognition result at the first historical time instant, the second feature vector sequence, the third feature vector sequence and the fourth feature vector sequence which are inputted to the decoder at the first historical time instant, to obtain a second state feature vector; and
inputting the second feature vector sequence, the third feature vector sequence and the fourth feature vector sequence which are inputted to the decoder at a current time instant to the second unidirectional long short-term memory layer to obtain a recognition result at the current time instant,
wherein the fourth feature vector sequence is obtained by performing, based on the second state feature vector, the first attention operation on the first feature vector sequence at the current time instant and the third feature vector sequence at the current time instant.

8. The speech recognition method according to any one of claims 1 to 7, wherein the encoding (103) an audio segment of each hot word in the predetermined hot-word bank to obtain a third feature vector sequence comprises:

encoding the audio segment of each hot word in the predetermined hot-word bank through at least one encoding layer to obtain the third feature vector sequence, wherein
the encoding layer comprises a long short-term memory layer in a long short-term memory neural network or a convolutional layer in a convolutional neural network, and
the long short-term memory layer is in an unidirectional long short-term memory neural network or a bidirectional long short-term memory neural network.

9. An electronic device, comprising: a processor, a memory, a communication interface, and at least one program, wherein
the at least one program is stored in the memory and configured to be executed by the processor to execute instructions of steps of the method according to any one of claims 1 to 8.

10. A computer readable storage medium, storing a computer program for electronic data interchange, wherein the computer program causes a computer to implement the method according to any one of claims 1 to 8.

11. A computer program product, wherein the computer program product comprises a non-transitory computer readable storage medium storing a computer program, and the computer program is operable to cause a computer to implement the method according to any one of claims 1 to 8.

**Patentansprüche**

1. Spracherkennungsverfahren, das Folgendes umfasst:

Codieren (101) zu erkennender Sprachdaten zur Gewinnung einer ersten Merkmalsvektorsequenz,
Codieren (102) jedes Hotwords in einer vorbestimmten Hotword-Bank zur Gewinnung einer zweiten Merkmalsvektorsequenz,
Codieren (103) eines Audiosegments jedes Hotwords in der vorbestimmten Hotword-Bank zur Gewinnung einer dritten Merkmalsvektorsequenz,
Durchführen (104) einer ersten Aufmerksamkeitsoperation an der ersten Merkmalsvektorsequenz und der dritten Merkmalsvektorsequenz zur Gewinnung einer vierten Merkmalsvektorsequenz, und
Durchführen (105) einer Decodierungsoperation auf der Grundlage der zweiten Merkmalsvektorsequenz, der dritten Merkmalsvektorsequenz und der vierten Merkmalsvektorsequenz zur Gewinnung eines Erkennungsergebnisses,
wobei das Durchführen (105) einer Decodierungsoperation auf der Grundlage der zweiten Merkmalsvektorsequenz, der dritten Merkmalsvektorsequenz und der vierten Merkmalsvektorsequenz zur Gewinnung eines Erkennungsergebnisses Folgendes umfasst:

Durchführen (205) einer zweiten Aufmerksamkeitsoperation an der zweiten Merkmalsvektorsequenz, der dritten Merkmalsvektorsequenz und der vierten Merkmalsvektorsequenz zur Gewinnung einer hotword-textkontextbezogenen Merkmalsvektorsequenz, einer hotword-audiokontextbezogenen Merkmalsvektorsequenz und einer audiokontextbezogenen Merkmalsvektorsequenz, und
Eingeben (206) der hotword-textkontextbezogenen Merkmalsvektorsequenz, der hotword-audiokontextbezogenen Merkmalsvektorsequenz und der audiokontextbezogenen Merkmalsvektorsequenz in einen Decodierer für eine Decodierungsoperation zur Gewinnung des Erkennungsergebnisses.

2. Spracherkennungsverfahren nach Anspruch 1, bei dem das Durchführen (104) einer ersten Aufmerksamkeitsoperation an der ersten Merkmalsvektorsequenz und der dritten Merkmalsvektorsequenz zur Gewinnung einer vierten Merkmalsvektorsequenz Folgendes umfasst:

Durchführen einer Abgleichoperation an jedem der ersten Merkmalsvektoren in der ersten Merkmalsvektorsequenz und jedem der dritten Merkmalsvektoren in der dritten Merkmalsvektorsequenz zur Gewinnung von Abgleichkoeffizienten, die den dritten Merkmalsvektoren entsprechen,
Durchführen einer Operation an den Abgleichkoeffizienten, die den dritten Merkmalsvektoren entsprechen, und an den dritten Merkmalsvektoren dementsprechend zur Gewinnung neuer Merkmalsvektoren, die den dritten Merkmalsvektoren entsprechen, und
Verketten der neuen Merkmalsvektoren, die den dritten Merkmalsvektoren entsprechen, mit den ersten Merkmalsvektoren dementsprechend zur Gewinnung von Repräsentationsvektoren, die den dritten Merkmalsvektoren entsprechen, als vierte Merkmalsvektorsequenz.

3. Spracherkennungsverfahren nach Anspruch 1 oder 2, bei dem das Durchführen (205) einer zweiten Aufmerksamkeitsoperation an der zweiten Merkmalsvektorsequenz, der dritten Merkmalsvektorsequenz und der vierten Merkmalsvektorsequenz zur Gewinnung einer hotword-textkontextbezogenen Merkmalsvektorsequenz, einer hotword-audiokontextbezogenen Merkmalsvektorsequenz und einer audiokontextbezogenen Merkmalsvektorsequenz Folgendes umfasst:

Gewinnen eines ersten Zustandsmerkmalsvektors des Decodierers zu einem aktuellen Zeitpunkt,
Durchführen einer Aufmerksamkeitsoperation an der zweiten Merkmalsvektorsequenz auf der Grundlage des ersten Zustandsmerkmalsvektors zur Gewinnung der hotword-textkontextbezogenen Merkmalsvektorsequenz zum aktuellen Zeitpunkt,
Durchführen einer Aufmerksamkeitsoperation an der dritten Merkmalsvektorsequenz auf der Grundlage des ersten Zustandsmerkmalsvektors zur Gewinnung der hotword-audiokontextbezogenen Merkmalsvektorsequenz zum aktuellen Zeitpunkt und
Durchführen einer Aufmerksamkeitsoperation an der vierten Merkmalsvektorsequenz auf der Grundlage des ersten Zustandsmerkmalsvektors zur Gewinnung der audiokontextbezogenen Merkmalsvektorsequenz zum aktuellen Zeitpunkt.

4. Spracherkennungsverfahren nach Anspruch 3, bei dem der Decodierer eine erste Schicht unidirektionalen langen Kurzzeitgedächtnisses umfasst und das Gewinnen eines ersten Zustandsmerkmalsvektors des Decodierers zu einem ersten historischen Zeitpunkt Folgendes umfasst:

Gewinnen eines Erkennungsergebnisses zu einem ersten historischen Zeitpunkt, der hotword-textkontextbezogenen Merkmalsvektorsequenz zum ersten historischen Zeitpunkt, der hotword-audiokontextbezogenen Merkmalsvektorsequenz zum ersten historischen Zeitpunkt und der audiokontextbezogenen Merkmalsvektorsequenz zum ersten historischen Zeitpunkt, und

Eingeben des Erkennungsergebnisses zum ersten historischen Zeitpunkt, der hotword-textkontextbezogenen Merkmalsvektorsequenz zum ersten historischen Zeitpunkt, der hotword-audiokontextbezogenen Merkmalsvektorsequenz zum ersten historischen Zeitpunkt und der audiokontextbezogenen Merkmalsvektorsequenz zum ersten historischen Zeitpunkt in die erste Schicht unidirektionalen langen Kurzzeitgedächtnisses zur Gewinnung des ersten Zustandsmerkmalsvektors.

5. Spracherkennungsverfahren nach Anspruch 1 oder 2, bei dem der Decodierer eine zweite Schicht unidirektionalen langen Kurzzeitgedächtnisses umfasst und das Eingeben (206) der hotword-textkontextbezogenen Merkmalsvektorsequenz, der hotword-audiokontextbezogenen Merkmalsvektorsequenz und der audiokontextbezogenen Merkmalsvektorsequenz in einen Decodierer für eine Decodierungsoperation zur Gewinnung eines Erkennungsergebnisses Folgendes umfasst:

Eingeben der hotword-textkontextbezogenen Merkmalsvektorsequenz, der hotword-audiokontextbezogenen Merkmalsvektorsequenz und der audiokontextbezogenen Merkmalsvektorsequenz, die zu einem aktuellen Zeitpunkt in den Decodierer eingegeben werden, in die zweite Schicht unidirektionalen langen Kurzzeitgedächtnisses zur Gewinnung eines Erkennungsergebnisses zum aktuellen Zeitpunkt, wobei

die hotword-textkontextbezogene Merkmalsvektorsequenz zum aktuellen Zeitpunkt, die hotword-audiokontextbezogene Merkmalsvektorsequenz zum aktuellen Zeitpunkt und die audiokontextbezogene Merkmalsvektorsequenz zum aktuellen Zeitpunkt gewonnen werden, indem auf der Grundlage eines ersten Zustandsmerkmalsvektors die zweite Aufmerksamkeitsoperation an der zweiten Merkmalsvektorsequenz zum aktuellen Zeitpunkt, der dritten Merkmalsvektorsequenz zum aktuellen Zeitpunkt bzw. der vierten Merkmalsvektorsequenz zum aktuellen Zeitpunkt durchgeführt wird.

6. Spracherkennungsverfahren nach Anspruch 1, bei dem das Durchführen (105) einer Decodierungsoperation auf der Grundlage der zweiten Merkmalsvektorsequenz, der dritten Merkmalsvektorsequenz und der vierten Merkmalsvektorsequenz zur Gewinnung eines Erkennungsergebnisses Folgendes umfasst:
Eingeben der zweiten Merkmalsvektorsequenz, der dritten Merkmalsvektorsequenz und der vierten Merkmalsvektorsequenz in einen Decodierer für eine Decodierungsoperation zur Gewinnung des Erkennungsergebnisses.

7. Spracherkennungsverfahren nach Anspruch 6, bei dem

der Decodierer zwei Schichten unidirektionalen langen Kurzzeitgedächtnisses umfasst, bei denen es sich um eine erste Schicht unidirektionalen langen Kurzzeitgedächtnisses und eine zweite Schicht unidirektionalen langen Kurzzeitgedächtnisses handelt, und

das Eingeben der zweiten Merkmalsvektorsequenz, der dritten Merkmalsvektorsequenz und der vierten Merkmalsvektorsequenz in einen Decodierer für eine Decodierungsoperation zur Gewinnung des Erkennungsergebnisses Folgendes umfasst:

Gewinnen eines Erkennungsergebnisses zu einem ersten historischen Zeitpunkt und der zweiten Merkmalsvektorsequenz, der dritten Merkmalsvektorsequenz und der vierten Merkmalsvektorsequenz, die zu dem ersten historischen Zeitpunkt in den Decodierer eingegeben werden,

Eingeben des Erkennungsergebnisses zum ersten historischen Zeitpunkt, der zweiten Merkmalsvektorsequenz, der dritten Merkmalsvektorsequenz und der vierten Merkmalsvektorsequenz, die zum ersten historischen Zeitpunkt in den Decodierer eingegeben werden, in die erste Schicht unidirektionalen langen Kurzzeitgedächtnisses zur Gewinnung eines zweiten Zustandsmerkmalsvektors, und

Eingeben der zweiten Merkmalsvektorsequenz, der dritten Merkmalsvektorsequenz und der vierten Merkmalsvektorsequenz, die zu einem aktuellen Zeitpunkt in den Decodierer eingegeben werden, in die zweite Schicht unidirektionalen langen Kurzzeitgedächtnisses zur Gewinnung eines Erkennungsergebnisses zum aktuellen Zeitpunkt,

wobei die vierte Merkmalsvektorsequenz gewonnen wird, indem auf der Grundlage des zweiten Zustandsmerkmalsvektors die erste Aufmerksamkeitsoperation an der ersten Merkmalsvektorsequenz zum aktuellen Zeitpunkt und der dritten Merkmalsvektorsequenz zum aktuellen Zeitpunkt durchgeführt wird.

8.  Spracherkennungsverfahren nach einem der Ansprüche 1 bis 7, bei dem das Codieren (103) eines Audiosegments jedes Hotwords in der vorbestimmten Hotword-Bank zur Gewinnung einer dritten Merkmalsvektorsequenz Folgendes umfasst:

    Codieren des Audiosegments jedes Hotwords in der vorbestimmten Hotword-Bank über wenigstens eine Codierungsschicht zur Gewinnung der dritten Merkmalsvektorsequenz, wobei
    die Codierungsschicht eine Schicht langen Kurzzeitgedächtnisses in einem neuronalen Netz mit langem Kurzzeitgedächtnis oder eine Faltungsschicht in einem neuronalen Faltungsnetz umfasst und
    die Schicht langen Kurzzeitgedächtnisses sich in einem neuronalen Netz mit unidirektionalem langen Kurzzeitgedächtnis oder einem neuronalen Netz mit bidirektionalem langen Kurzzeitgedächtnis befindet.

9.  Elektronische Vorrichtung, mit: einem Prozessor, einem Speicher, einer Kommunikationsschnittstelle und wenigstens einem Programm, wobei
    das wenigstens eine Programm in dem Speicher gespeichert und so ausgebildet ist, dass es von dem Prozessor so ausgeführt wird, dass es Befehle von Schritten des Verfahrens nach einem der Ansprüche 1 bis 8 ausführt.

10. Computerlesbares Speichermedium, auf dem ein Computerprogramm zum elektronischen Datenaustausch gespeichert ist, wobei das Computerprogramm bewirkt, dass ein Computer das Verfahren nach einem der Ansprüche 1 bis 8 durchführt.

11. Computerprogrammprodukt, wobei das Computerprogrammprodukt ein nichtflüchtiges, computerlesbares Speichermedium umfasst, auf dem ein Computerprogramm gespeichert ist, und das Computerprogramm so betrieben werden kann, dass es bewirkt, dass ein Computer das Verfahren nach einem der Ansprüche 1 bis 8 durchführt.


**Revendications**

1.  Procédé de reconnaissance vocale, comprenant :

    le codage (101) de données vocales à reconnaître afin d'obtenir une première séquence de vecteurs de caractéristiques ;
    le codage (102) de chaque mot-clé dans une banque de mots-clés prédéterminée afin d'obtenir une deuxième séquence de vecteurs de caractéristiques ;
    le codage (103) d'un segment audio de chaque mot-clé dans la banque de mots-clés prédéterminée afin d'obtenir une troisième séquence de vecteurs de caractéristiques ;
    la réalisation (104) d'une première opération d'attention sur la première séquence de vecteurs de caractéristiques et la troisième séquence de vecteurs de caractéristiques afin d'obtenir une quatrième séquence de vecteurs de caractéristiques ; et
    la réalisation (105) d'une opération de décodage sur la base de la deuxième séquence de vecteurs de caractéristiques, de la troisième séquence de vecteurs de caractéristiques et de la quatrième séquence de vecteurs de caractéristiques afin d'obtenir un résultat de reconnaissance,
    la réalisation (105) d'une opération de décodage sur la base de la deuxième séquence de vecteurs de caractéristiques, de la troisième séquence de vecteurs de caractéristiques et de la quatrième séquence de vecteurs de caractéristiques afin d'obtenir un résultat de reconnaissance comprenant :

    la réalisation (205) d'une deuxième opération d'attention sur la deuxième séquence de vecteurs de caractéristiques, la troisième séquence de vecteurs de caractéristiques et la quatrième séquence de vecteurs de caractéristiques afin d'obtenir une séquence de vecteurs de caractéristiques contextuelle de texte de mots-clés, une séquence de vecteurs de caractéristiques contextuelle audio de mots-clés et une séquence de vecteurs de caractéristiques contextuelle audio ; et
    l'entrée (206) de la séquence de vecteurs de caractéristiques contextuelle de texte de mots-clés, de la séquence de vecteurs de caractéristiques contextuelle audio de mots-clés et de la séquence de vecteurs de caractéristiques contextuelle audio dans un décodeur pour une opération de décodage afin d'obtenir le résultat de reconnaissance.

2.  Procédé de reconnaissance vocale selon la revendication 1, la réalisation (104) d'une première opération d'attention sur la première séquence de vecteurs de caractéristiques et la troisième séquence de vecteurs de caractéristiques afin d'obtenir une quatrième séquence de vecteurs de caractéristiques comprenant :

la réalisation d'une opération d'appariement sur chacun des premiers vecteurs de caractéristiques dans la première séquence de vecteurs de caractéristiques et chacun des troisièmes vecteurs de caractéristiques dans la troisième séquence de vecteurs de caractéristiques afin d'obtenir des coefficients d'appariement correspondant aux troisièmes vecteurs de caractéristiques ;
la réalisation d'une opération sur les coefficients d'appariement correspondant aux troisièmes vecteurs de caractéristiques et sur les troisièmes vecteurs de caractéristiques de manière correspondante afin d'obtenir de nouveaux vecteurs de caractéristiques correspondant aux troisièmes vecteurs de caractéristiques ; et
la concaténation des nouveaux vecteurs de caractéristiques correspondant aux troisièmes vecteurs de caractéristiques avec les premiers vecteurs de caractéristiques de manière correspondante afin d'obtenir des vecteurs de représentation correspondant aux troisièmes vecteurs de caractéristiques en tant que quatrième séquence de vecteurs de caractéristiques.

3. Procédé de reconnaissance vocale selon la revendication 1 ou 2, la réalisation (205) d'une deuxième opération d'attention sur la deuxième séquence de vecteurs de caractéristiques, la troisième séquence de vecteurs de caractéristiques et la quatrième séquence de vecteurs de caractéristiques afin d'obtenir une séquence de vecteurs de caractéristiques contextuelle de texte de mots-clés, une séquence de vecteurs de caractéristiques contextuelle audio de mots-clés et une séquence de vecteurs de caractéristiques contextuelle audio comprenant :

l'obtention d'un premier vecteur de caractéristiques d'état du décodeur à un instant actuel ;
la réalisation d'une opération d'attention sur la deuxième séquence de vecteurs de caractéristiques sur la base du premier vecteur de caractéristiques d'état afin d'obtenir la séquence de vecteurs de caractéristiques contextuelle de texte de mots-clés à l'instant actuel ;
la réalisation d'une opération d'attention sur la troisième séquence de vecteurs de caractéristiques sur la base du premier vecteur de caractéristiques d'état afin d'obtenir la séquence de vecteurs de caractéristiques contextuelle audio de mots-clés à l'instant actuel ; et
la réalisation d'une opération d'attention sur la quatrième séquence de vecteurs de caractéristiques sur la base du premier vecteur de caractéristiques d'état afin d'obtenir la séquence de vecteurs de caractéristiques contextuelle audio à l'instant actuel.

4. Procédé de reconnaissance vocale selon la revendication 3, le décodeur comprenant une première couche de mémoire à court terme et long terme unidirectionnelle, et l'obtention d'un premier vecteur de caractéristiques d'état du décodeur à un premier instant historique comprenant :

l'obtention d'un résultat de reconnaissance à un premier instant historique, de la séquence de vecteurs de caractéristiques contextuelle de texte de mots-clés au premier instant historique, de la séquence de vecteurs de caractéristiques contextuelle audio de mots-clés au premier instant historique et de la séquence de vecteurs de caractéristiques contextuelle audio au premier instant historique ; et
l'entrée, dans la première couche de mémoire à court terme et long terme unidirectionnelle, du résultat de reconnaissance au premier instant historique, de la séquence de vecteurs de caractéristiques contextuelle de texte de mots-clés au premier instant historique, de la séquence de vecteurs de caractéristiques contextuelle audio de mots-clés au premier instant historique et de la séquence de vecteurs de caractéristiques contextuelle audio au premier instant historique, afin d'obtenir le premier vecteur de caractéristiques d'état.

5. Procédé de reconnaissance vocale selon la revendication 1 ou 2, le décodeur comprenant une deuxième couche de mémoire à court et long terme unidirectionnelle, et l'entrée (206) de la séquence de vecteurs de caractéristiques contextuelle de texte de mots-clés, de la séquence de vecteurs de caractéristiques contextuelle audio de mots-clés et de la séquence de vecteurs de caractéristiques contextuelle audio dans un décodeur pour une opération de décodage afin d'obtenir un résultat de reconnaissance comprenant :

l'entrée de la séquence de vecteurs de caractéristiques contextuelle de texte de mots-clés, de la séquence de vecteurs de caractéristiques contextuelle audio de mots-clés et de la séquence de vecteurs de caractéristiques contextuelle audio, qui sont entrées dans le décodeur à un instant actuel, dans la deuxième couche de mémoire à court terme et long terme unidirectionnelle afin d'obtenir un résultat de reconnaissance à l'instant actuel,
la séquence de vecteurs de caractéristiques contextuelle de texte de mots-clés à l'instant actuel, la séquence de vecteurs de caractéristiques contextuelle audio de mots-clés à l'instant actuel et la séquence de vecteurs de caractéristiques contextuelle audio à l'instant actuel étant obtenues en réalisant, sur la base d'un premier vecteur de caractéristiques d'état, la deuxième opération d'attention sur la deuxième séquence de vecteurs de caractéristiques à l'instant actuel, la troisième séquence de vecteurs de caractéristiques à l'instant actuel et la quatrième séquence de vecteurs de caractéristiques à l'instant actuel, respectivement.

6. Procédé de reconnaissance vocale selon la revendication 1, la réalisation (105) d'une opération de décodage sur la base de la deuxième séquence de vecteurs de caractéristiques, de la troisième séquence de vecteurs de caractéristiques et de la quatrième séquence de vecteurs de caractéristiques afin d'obtenir un résultat de reconnaissance comprenant :

l'entrée de la deuxième séquence de vecteurs de caractéristiques, de la troisième séquence de vecteurs de caractéristiques et de la quatrième séquence de vecteurs de caractéristiques dans un décodeur pour une opération de décodage afin d'obtenir le résultat de reconnaissance.

7. Procédé de reconnaissance vocale selon la revendication 6,

le décodeur comprenant deux couches de mémoire à court terme et long terme unidirectionnelle qui sont une première couche de mémoire à court terme et long terme unidirectionnelle et une deuxième couche de mémoire à court terme et long terme unidirectionnelle, et
l'entrée de la deuxième séquence de vecteurs de caractéristiques, de la troisième séquence de vecteurs de caractéristiques et de la quatrième séquence de vecteurs de caractéristiques dans un décodeur pour une opération de décodage afin d'obtenir le résultat de reconnaissance comprenant :

l'obtention d'un résultat de reconnaissance à un premier instant historique et de la deuxième séquence de vecteurs de caractéristiques, de la troisième séquence de vecteurs de caractéristiques et de la quatrième séquence de vecteurs de caractéristiques entrées dans le décodeur au premier instant historique ;
l'entrée, dans la première couche de mémoire à court terme et long terme unidirectionnelle, du résultat de reconnaissance au premier instant historique, de la deuxième séquence de vecteurs de caractéristiques, de la troisième séquence de vecteurs de caractéristiques et de la quatrième séquence de vecteurs de caractéristiques entrées dans le décodeur au premier instant historique, afin d'obtenir un deuxième vecteur de caractéristiques d'état ; et
l'entrée de la deuxième séquence de vecteurs de caractéristiques, de la troisième séquence de vecteurs de caractéristiques et de la quatrième séquence de vecteurs de caractéristiques entrées dans le décodeur à un instant actuel dans la deuxième couche de mémoire à court et long terme unidirectionnelle afin d'obtenir un résultat de reconnaissance à l'instant actuel,
la quatrième séquence de vecteurs de caractéristiques étant obtenue en réalisant, sur la base du deuxième vecteur de caractéristiques d'état, la première opération d'attention sur la première séquence de vecteurs de caractéristiques à l'instant actuel et la troisième séquence de vecteurs de caractéristiques à l'instant actuel.

8. Procédé de reconnaissance vocale selon l'une des revendications 1 à 7, le codage (103) d'un segment audio de chaque mot-clé dans la banque de mots-clés prédéterminée afin d'obtenir une troisième séquence de vecteurs de caractéristiques comprenant :

le codage du segment audio de chaque mot-clé dans la banque de mots-clés prédéterminée à travers au moins une couche de codage afin d'obtenir la troisième séquence de vecteurs de caractéristiques,
la couche de codage comprenant une couche de mémoire à court terme et long terme dans un réseau neuronal à mémoire à court terme et long terme ou une couche convolutive dans un réseau neuronal convolutif, et
la couche de mémoire à court terme et long terme se trouvant dans un réseau neuronal à mémoire à court terme et long terme unidirectionnelle ou un réseau neuronal à mémoire à court terme et long terme bidirectionnelle.

9. Dispositif électronique, comprenant : un processeur, une mémoire, une interface de communication et au moins un programme,
ledit au moins un programme étant stocké dans la mémoire et configuré de manière à être exécuté par le processeur afin d'exécuter les instructions des étapes du procédé selon l'une des revendications 1 à 8.

10. Support de stockage lisible par ordinateur, stockant un programme informatique pour l'échange de données électroniques, le programme informatique amenant un ordinateur à mettre en œuvre le procédé selon l'une des revendications 1 à 8.

11. Produit de programme informatique, le produit de programme informatique comprenant un support de stockage non transitoire lisible par ordinateur stockant un programme informatique, et le programme informatique étant apte à être opéré de manière à amener un ordinateur à mettre en œuvre le procédé selon l'une des revendications 1 à 8.

**Figure 1A**

| Encode to-be-recognized speech data to obtain a first feature vector sequence | 101 |

| Encode each hot word in a predetermined hot-word bank to obtain a second feature vector sequence | 102 |

| Encode an audio segment of each hot word in the predetermined hot-word bank to obtain a third feature vector sequence | 103 |

| Perform a first attention operation on the first feature vector sequence and the third feature vector sequence to obtain a fourth feature vector sequence | 104 |

| Perform a decoding operation based on the second feature vector sequence, the third feature vector sequence and the fourth feature vector sequence to obtain a recognition result | 105 |

**Figure 1B**

$$\mathbf{h}_f^z \qquad \mathbf{h}_b^z \qquad \text{Output:} \quad \mathbf{h}^z = \begin{bmatrix} \mathbf{h}_f^z \\ \mathbf{h}_b^z \end{bmatrix}$$

Input:" 神奈川"

**Figure 1C**

**Figure 1D**

Encode to-be-recognized speech data to obtain a first feature vector sequence /101

Encode each hot word in a predetermined hot-word bank to obtain a second feature vector sequence /102

Encode an audio segment of each hot word in the predetermined hot-word bank to obtain a third feature vector sequence /103

Perform a first attention operation on the first feature vector sequence and the third feature vector sequence to obtain a fourth feature vector sequence /104

Perform a second attention operation on the second feature vector sequence, the third feature vector sequence and the fourth feature vector sequence to obtain a hot-word text contextual feature vector sequence, a hot-word audio contextual feature vector sequence and an audio contextual feature vector sequence /105

Input the hot-word text contextual feature vector sequence, the hot-word audio contextual feature vector sequence and the audio contextual feature vector sequence to a decoder for a decoding operation to obtain a recognition result /106

**Figure 2**

**Figure 3**

**Figure 4A**

400

404

401

Frame-level
attention module

Audio encoder
module

403

Hot-word audio
encoder module

4052

4051

Decoder

Word-level
attention module

402

Hot-word text
encoder module

Speech recognition apparatus

**Figure 4B**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 111583909 A

- US 2020357387 A1

**Non-patent literature cited in the description**

- Phoebe: Pronunciation-aware Contextualization for End-to-end Speech Recognition. **BRUGUIER ANTOINE et al.** ICASSP 20192019 IEEE INTERNATIONAL CONFERENCE ON ACOUSTICS, SPEECH AND SIGNAL PROCESSING (ICASSP). IEEE, 12 May 2019, 6171-6175